(19) Europäisches Patentamt
European Patent Office
Office européen des brevets

(11) **EP 4 321 318 A1**

(12) **EUROPEAN PATENT APPLICATION**
published in accordance with Art. 153(4) EPC

(43) Date of publication:
**14.02.2024 Bulletin 2024/07**

(51) International Patent Classification (IPC):
**B28D 5/04** (2006.01)

(21) Application number: **22886001.1**

(86) International application number:
**PCT/CN2022/127592**

(22) Date of filing: **26.10.2022**

(87) International publication number:
**WO 2023/072124 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2021 CN 202111284166**

(71) Applicant: **Qingdao Gaoce Technology Co., Ltd Qingdao, Shandong 266114 (CN)**

(72) Inventors:
• **LIU, Kecun**
 **Qingdao, Shandong 266114 (CN)**

• **SUN, Peng**
 **Qingdao, Shandong 266114 (CN)**
• **FAN, Changkun**
 **Qingdao, Shandong 266114 (CN)**
• **HAN, Faquan**
 **Qingdao, Shandong 266114 (CN)**
• **ZHOU, Cong**
 **Qingdao, Shandong 266114 (CN)**
• **DAI, Xinhui**
 **Qingdao, Shandong 266114 (CN)**
• **HOU, Shengen**
 **Qingdao, Shandong 266114 (CN)**
• **SONG, Peilin**
 **Qingdao, Shandong 266114 (CN)**

(74) Representative: **Studio Torta S.p.A.
Via Viotti, 9
10121 Torino (IT)**

(54) **SILICON ROD CUTTING SYSTEM**

(57) A silicon rod cutting system, including: a machine base (1), wherein the machine base has at least two cutting stations, which are disposed at intervals; at least two cutting devices (4), which are fixed on the machine base, wherein the cutting devices are in one-to-one correspondence with the cutting stations, and the cutting devices are configured to cut a silicon rods on the cutting stations; a loading and unloading device (2), which is fixed with the machine base, wherein the loading and unloading device is configured to load a round silicon rod and unloading a square rod formed by cutting; and a transfer device (3), which is disposed on the machine base and is disposed between the cutting stations, wherein the transfer device is configured transfer, to the cutting station, the silicon rod loaded by the loading and unloading device, and transfer the square rod formed on the cutting stations to the loading and unloading device. The at least two cutting stations of the silicon rod cutting system share one loading and unloading device and one transfer device, so that the components of the silicon rod cutting system are fewer, and the occupied space is relatively small.

Fig. 1A

## Description

## Technical Field

The present disclosure relates to the technical field of silicon rod cutting, and in particular to a silicon rod cutting system.

## Background

At present, with the emphasis and openness of the society for the utilization of green and renewable energy sources, the field of photovoltaic solar power generation is getting more and more attention and development. In the field of photovoltaic power generation, a common crystalline silicon solar cell is fabricated on a high-quality silicon wafer, and this silicon wafer is cut from a pulled or cast silicon rod by a wire saw, that is, a wire cutting technology.

The wire cutting technology is a relatively advanced squaring processing technology in the world at present, and the principle thereof is to rub a workpiece to be machined (such as a silicon rod, a sapphire, or other semiconductor hard and brittle materials) by means of a diamond wire moving at a high speed, so as to cut a square rod, thereby achieving the purpose of cutting. Compared with traditional knife saw blades, grinding wheel blades and inner circle cutting, the wire cutting technology has the advantages of high efficiency, high productivity, high precision, etc.

## Summary

Technical Problem

An existing silicon rod cutting system cannot meet the requirements of the photovoltaic industry for silicon wafers.

Solution to Problem

Technical Solution

An embodiment of the present disclosure provides a silicon rod cutting system of a new structure.

The embodiment of the present disclosure provides a silicon rod cutting system, including:

a machine base, wherein the machine base has at least two cutting stations, which are disposed at intervals;

at least two cutting devices, which are fixed on the machine base, wherein the at least two cutting devices and the at least two cutting stations are disposed in a one-to-one correspondence manner, and the at least two cutting devices are configured to cut silicon rods on the cutting stations;

a loading and unloading device, which is fixed with the machine base, wherein the loading and unloading device is configured to load a round silicon rod and unload a square rod formed by cutting; and

a transfer device, which is disposed on the machine base and is disposed between the cutting stations, wherein the transfer device is configured to transfer, to the at least two cutting station, the silicon rod loaded by the loading and unloading device, and transfer, to the loading and unloading device, the square rod formed by cutting on the at least two cutting station.

Beneficial Effects of the Invention

Beneficial Effects

Some embodiments of the present disclosure has the following technical effects due to the utilization of the above technical solutions:

In the silicon rod cutting system, the at least two cutting stations share one loading and unloading device and one transfer device, so that the components of the silicon rod cutting system are fewer, and the occupied space is also relatively small.

## Brief Description of the Drawings

Fig. 1 illustrates a schematic diagram of a cutting process of a silicon rod cutting system according to an embodiment of the present disclosure;

Fig. 1A illustrates a schematic diagram of the silicon rod cutting system according to an embodiment of the present disclosure;

Fig. 1B and Fig. 1C illustrate schematic diagrams of transferring a round silicon rod from a loading and unloading device to a cutting device by a transfer device of the silicon rod cutting system shown in Fig. 1A;

Fig. 2A illustrates a schematic diagram of the loading and unloading device of the silicon rod cutting system according to an embodiment of the present disclosure;

Fig. 2B illustrates a schematic diagram of another angle of Fig. 2A;

Fig. 2C illustrates a partial enlarged view of Fig. 2B;

Fig. 3A, Fig. 3B and Fig. 3C illustrate schematic diagrams of the transfer device of the silicon rod cutting system according to an embodiment of the present disclosure;

Fig. 3D and Fig. 3E illustrate schematic diagrams of an upper clamping jaw assembly and a lower clamping jaw assembly of the transfer device of Fig. 3A;

Fig. 3F illustrates a schematic diagram of a crystal line endpoint of four crystal lines of a silicon rod on an end face of the silicon rod;

Fig. 4A illustrates a schematic diagram of a cutting handpiece mechanism of the cutting device of the silicon rod cutting system according to an embodiment of the present disclosure;

Fig. 4B illustrates a schematic diagram of cutting a silicon rod from top to bottom by two cutting handpiece mechanisms of the same cutting device of the silicon rod cutting system according to an embodiment of the present disclosure;

Fig. 4C and Fig. 4D illustrate schematic diagrams of removing, from a handpiece through hole, two flaw-pieces formed by one-time cutting in Fig. 4B;

Fig. 4E illustrates a schematic diagram of a tension wheel assembly of the cutting handpiece mechanism shown in Fig. 4A;

Fig. 4F illustrates a schematic diagram of a support frame, a transverse feeding mechanism and a vertical feeding mechanism of the cutting device shown in Fig. 1A;

Fig. 4G illustrates a schematic diagram of a silicon rod chuck mechanism of the silicon rod cutting system shown in Fig. 1A cooperating with a silicon rod support mechanism to clamp a silicon rod;

Fig. 4H illustrates a schematic diagram of the silicon rod support mechanism shown in Fig. 4G;

Fig. 5 illustrates a schematic diagram of cooperation among a machine base, two cutting devices and a flaw-piece unloading device of the silicon rod cutting system according to an embodiment of the present disclosure;

Fig. 5A illustrates a schematic diagram of a flaw-piece clamping frame of the flaw-piece unloading device of the silicon rod cutting system according to an embodiment of the present disclosure;

Fig. 5B illustrates a schematic diagram of a relative position of the flaw-piece clamping frame (having a cover plate) shown in Fig. 5A before a flaw-piece is clamped;

Fig. 5C illustrates a schematic diagram of the flaw-piece clamping frame shown in Fig. 5A cooperating with a clamping frame motion assembly to form a flaw-piece clamping mechanism;

Fig. 5D illustrates a schematic diagram of mutual cooperation of the flaw-piece clamping frame shown in Fig. 5A and the cutting device of the silicon rod cutting system; and

Fig. 5E illustrates a schematic diagram of collecting flaw-pieces by a flaw-piece collection mechanism of the flaw-piece unloading device of the silicon rod cutting system according to an embodiment of the present disclosure.

## Detailed Description of the Embodiments

Exemplary embodiments of the present disclosure will be further described in detail below in combination with the accompanying drawings.

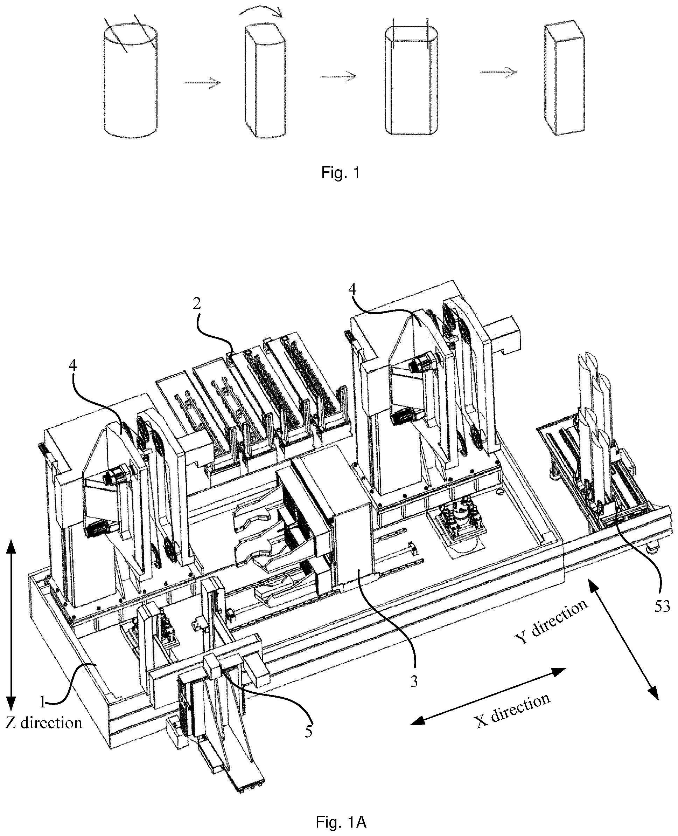

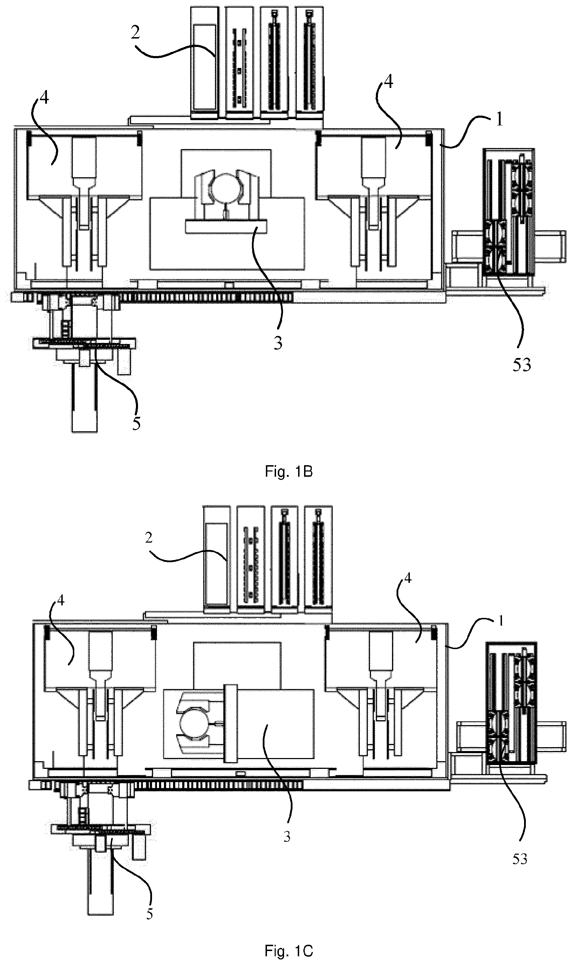

A silicon rod cutting system according to an embodiment of the present disclosure is configured to vertically cut a round silicon rod disposed vertically. The cutting process of the silicon rod is shown in Fig. 1, and the round silicon rod is cut twice to form one square rod and four flaw-pieces. The round silicon rod disposed vertically is also referred to as a vertical round silicon rod.

As shown in Fig. 1A, Fig. 1B and Fig. 1C, the silicon rod cutting system according to the embodiment of the present disclosure includes:

a machine base 1, wherein the machine base 1 has two parallel cutting stations, which are disposed at intervals;

two cutting devices 4, which are fixed on the machine base 1, wherein the two cutting devices 4 are in one-to-one correspondence with the two cutting stations; the cutting device 4 is provided with a diamond wire, a part of the diamond wire configured to cut the silicon rod in motion is a cutting segment, the cutting segment is a transversely disposed cutting segment, and the cutting segment is configure to cut, from top to bottom, a silicon rod which is disposed vertically on the cutting station;

a loading and unloading device 2, which is fixed with the machine base 1, wherein the loading and unloading device 2 is configured to load a round silicon rod and unload a square rod formed by cutting; and

a transfer device 3, which is disposed on the machine base 1 and is disposed between the two cutting stations, wherein the transfer device 3 is configured to transfer, to the two cutting stations, the silicon rod loaded by the loading and unloading device 2, and transfer, to the loading and unloading device 2, the square rod formed on the two cutting stations. That is, the transfer device is configured to transfer the silicon rod and the square rod between the loading and unloading device 2 and the cutting device 4.

A height direction of the silicon rod cutting system is a Z direction of the silicon rod cutting system, that is, the Z direction of the silicon rod cutting system is a vertical direction, an arrangement direction of the two cutting stations is an X direction of the silicon rod cutting system, and a Y direction of the silicon rod cutting system is perpendicular to the X direction and the Z direction of the silicon rod cutting system. Two independent cutting stations are disposed on the machine base at intervals in parallel, the two cutting stations respectively correspond to one cutting device, and the two cutting stations share a set of the loading and unloading device 2, the transfer device 3 and a flaw-piece unloading device 5. The two cutting stations in the silicon rod cutting system share one loading and unloading device and one transfer device, so that the components of the silicon rod cutting system are fewer, and the occupied space is also relatively small.

In some embodiments, as shown in Fig. 1A, Fig. 1B and Fig. 1C, the silicon rod cutting system further includes a flaw-piece unloading device 5, which is configured to clamp, transfer and collect flaw-pieces formed by the cutting the silicon rod.

In some embodiments, the flaw-piece unloading device 5 includes:

a flaw-piece clamping mechanism 51; and

a flaw-piece collection mechanism 53, wherein the flaw-piece collection mechanism 53 has collection areas, and the collection areas are in one-to-one correspondence with the cutting stations; and

the flaw-piece clamping mechanism 51 is configured to clamp, on the cutting stations, the flaw-pieces formed by cutting the silicon rod, and transport and place the flaw-pieces in the flaw-piece collection mechanism, and the flaw-pieces formed by cutting the same silicon rod are placed in the same collection area.

The two cutting stations share one flaw-piece clamping mechanism, and the flaw-pieces formed by cutting on the two cutting stations are transported and placed in the same flaw-piece collection mechanism. The two cutting stations in the silicon rod cutting system share one flaw-piece clamping mechanism and share one flaw-piece collection mechanism, so that the components of the silicon rod cutting system are fewer, and the occupied space is also relatively small.

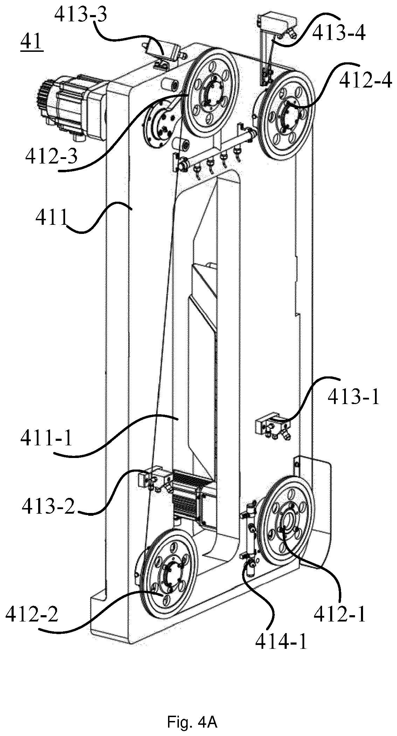

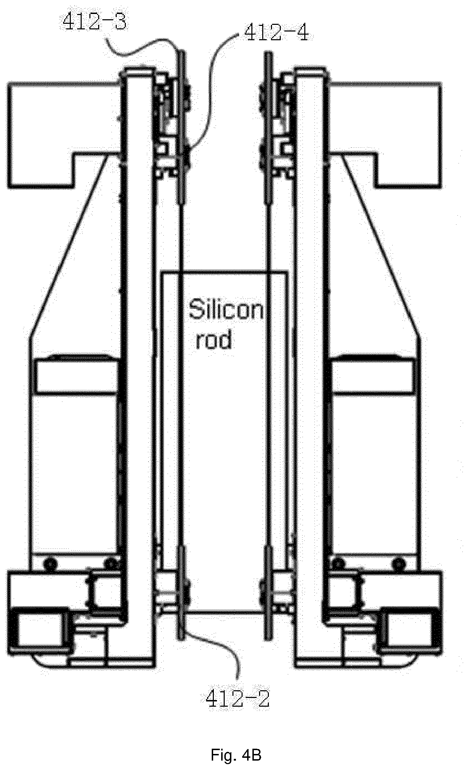

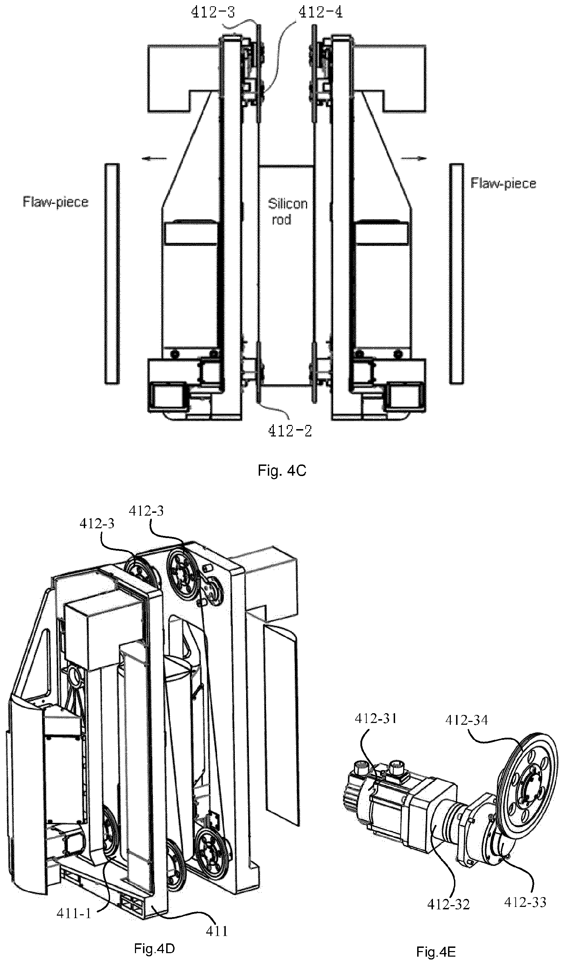

In some embodiments, as shown in Fig. 1A, Fig. 1B, Fig. 1C, Fig. 4A, Fig. 4B, Fig. 4C and Fig. 4D, each cutting device is provided with two disposed opposite to each other cutting handpiece mechanisms 41, the cutting handpiece mechanism 41 is provided with a diamond wire and a handpiece through hole 411-1 that extends vertically, and a cutting segment of the diamond wire and the handpiece through hole 411-1 are disposed in a staggered mode, that is, they do not interfere with each other, wherein the cutting segment is a part of the diamond wire used for cutting the silicon rod in motion; and the flaw-piece clamping mechanism is configured to pass through the handpiece through hole and entering the space between the two cutting handpiece mechanisms 41 to clamp the flaw-pieces, and exiting from the handpiece through hole 411-1 to take out the flaw-pieces from the two cutting handpiece mechanisms 41.

Various components of the silicon rod cutting system are respectively described below.

First component: the structure of the machine base of the silicon rod cutting system

The machine base of the silicon rod cutting system is a basic support member, which has higher rigidity stability. During workshop layout, the machine base of the silicon rod cutting system is connected with the machine bases of other systems, so as to form a complete production line.

Second component: the structure of the loading and unloading device of the silicon rod cutting system

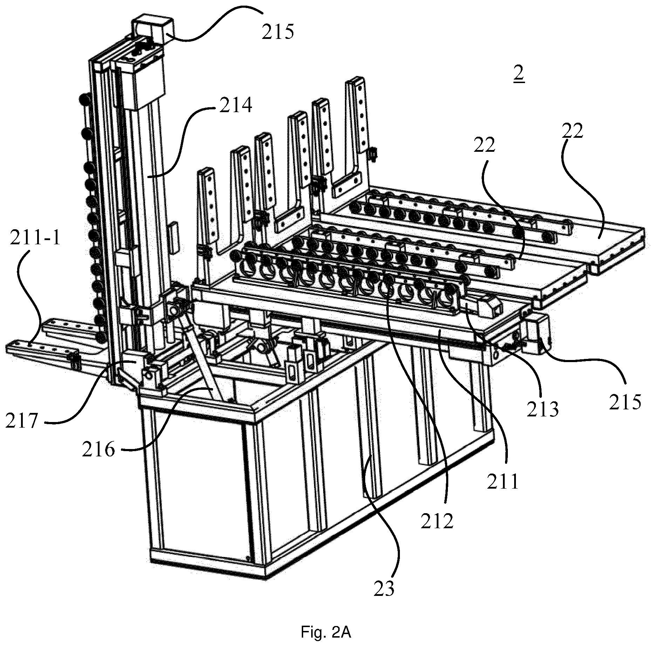

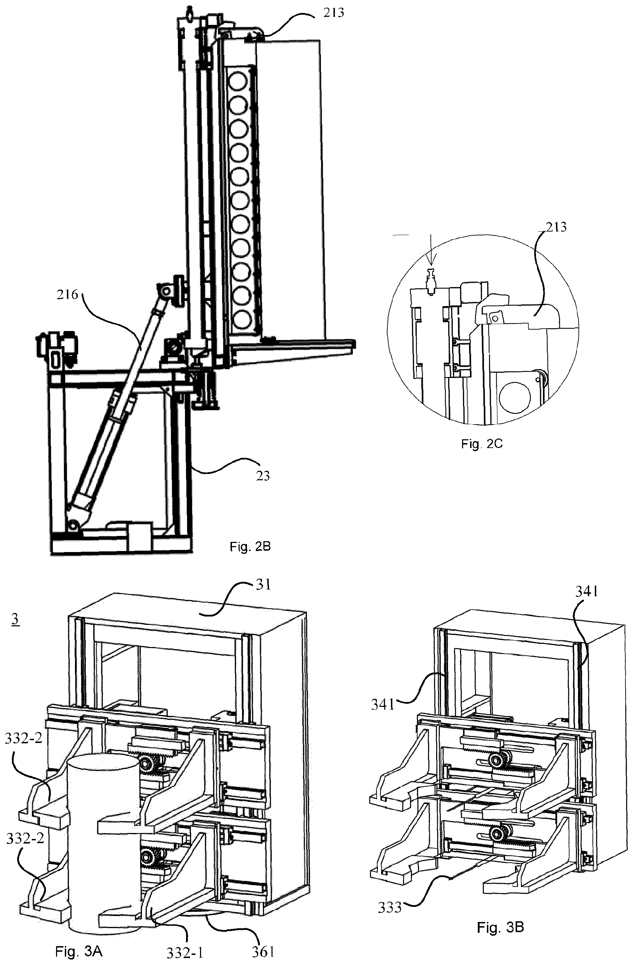

In some embodiments, as shown in Fig. 1A, Fig. 2A, Fig. 2B and Fig. 2C, the loading and unloading device 2 of the silicon rod cutting system includes a round rod loading assembly, wherein the round rod loading assembly includes:

an L-shaped round rod loading rack 211;

the loading and unloading device further includes:

a loading and unloading support frame 23, wherein the round rod loading rack 211 is rotatably connected with the loading and unloading support frame 23;

a loading turnover driving device, which is respectively fixed with the bottom of the loading and unloading support frame and the outer bottom of the round rod loading rack, wherein the loading turnover driving device is configured to drive the round rod loading rack to turn over by 90 degrees from an initial position of the round rod loading rack; and

a loading processing unit, which is configured to controll the loading turnover driving device to control the round rod loading rack to accelerate the turnover at first, and when the round rod loading rack is turned over to a preset angle, reducing the turnover speed of the round rod loading rack until the round rod loading rack is turned over by 90 degrees.

In some embodiments, the value range of the preset angle is greater than or equal to 60 degrees and less than or equal to 85 degrees.

In some embodiments, the loading turnover driving device is a loading turnover oil cylinder 216;

a cylinder body of the loading turnover oil cylinder 216 is fixed on the bottom of the loading and unloading support frame, an upper end of a guide rod of the loading turnover oil cylinder 216 is fixed with the outer bottom of the round rod loading rack 211, and the loading turnover oil cylinder 216 is configured to drive the round rod loading rack 211 to turn over by 90 degrees from the initial position of the round rod loading rack; and

the loading processing unit is configured to, when the round rod loading rack 211 is turned over to the preset angle, reduce the stretching speed of the loading turnover oil cylinder 211, so as to reduce the turnover speed of the round rod loading rack 211.

In some embodiments, as shown in Fig. 2A and Fig. 2B, the loading and unloading device further includes:

a deceleration proximity switch 217, which is connected with the loading processing unit, and is fixed to a position where a long arm of the round rod loading rack is turned over to the preset angle,

wherein the loading processing unit is configured to, after receiving an in-place signal of the deceleration proximity switch, adjust the flow rate of an oil inlet of the loading turnover oil cylinder to reduce the turnover speed, until the round rod loading rack is turned over by 90 degrees.

Due to the cooperation of the deceleration proximity switch and the loading processing unit, by means of a simple structure, when the round rod loading rack is turned over by approximately 90 degrees, that is, when the silicon rod is turned over by approximately 90 degrees, the turnover speed is reduced, so that the speed of turning over the silicon rod by 90 degrees is lower, and the impact on the silicon rod is relatively small, thereby realizing an effect of protecting the silicon rod.

In some embodiments, as shown in Fig. 2A and Fig. 2B, the inner side of a short arm of the round rod loading rack 211 is a length measurement reference surface 211-1;

the round rod loading assembly further includes:

a round rod support mechanism 212, which is fixed on the inner side of the long arm of the round rod loading rack 211 and is configured to support a round silicon rod which placed horizontally when the long arm of the round rod loading rack 211 is transversely placed;

a round rod clamping block 213 and a round rod clamping driving device, wherein the round rod clamping driving device is respectively fixed with the round rod support mechanism and the round rod clamping block; the round rod clamping block 213 is configured to, under the driving of the round rod clamping driving device, push the round silicon rod disposed on the round rod support mechanism to abut against the length measurement reference surface 211-1 for clamping and fixing; and

a clamping block displacement measurement device 215, which is fixed with the round rod loading rack 211 and is configured to measure the displacement of the round rod clamping block 213; and

the loading processing unit is further configured to obtain the length of the round silicon rod according to the distance between the initial position of the round rod clamping block and the length measurement reference surface, as well as the displacement of the round rod clamping block; and the initial position of the round rod clamping block is a position where the round rod clamping block is disposed when the round rod clamping driving device extends to the maximum length.

When the round silicon rod needs to be loaded, firstly, the L-shaped round rod loading rack is placed in such a way that the long arm of the round rod loading rack is transversely placed; and then, the round silicon rod is horizontally placed on the round rod support mechanism for material-presence detection. The length of the silicon rod needs to be measured, in order to subsequently transfer and cut the silicon rod. The distance between the position of the length measurement reference surface and the initial position of the round rod clamping block is determined. When the result of the material-presence detection is that there is a material, the round rod clamping block starts to move from the round rod clamping block under the driving of a round rod clamping gas cylinder, until the end face of one side of the silicon rod is pushed to abut against the length measurement reference surface, the clamping block displacement measurement device measures the displacement of the round rod clamping block, and then a round rod processing unit calculates the length of the round silicon rod.

In some embodiments, the material-presence detection is performed by a photoelectric switch of the loading and unloading device, which is configured to the material-presence detection.

In some embodiments, the round rod clamping driving device is a round rod clamping gas cylinder 214, the cylinder body of the round rod clamping gas cylinder 214 is fixed with the round rod loading rack 211, and the round rod clamping block 213 is fixed on the upper end of the guide rod of the round rod clamping gas cylinder 214; and

the round rod clamping block 213 is configured to, under the driving of the round rod clamping cylinder 214, push the round silicon rod disposed on the round rod support mechanism to abut against the length measurement reference surface 211-1 for clamping and fixing; and the initial position of the round rod clamping block is a position where the round rod clamping block is disposed when the guide rod of the round rod clamping gas cylinder extends to the maximum length.

In some embodiments, the loading processing unit is used for obtaining the length L of the round silicon rod according to the following relational expression:

$$L=K-S,$$

wherein, K denotes the distance between the initial position of the round rod clamping block and the length measurement reference surface, and S denotes the displacement of the round rod clamping block.

In this way, the length of the silicon rod can be quickly and conveniently obtained.

In some embodiments, the clamping block displacement measurement device is a stretching encoder.

The stretching encoder, serving as the clamping block displacement measurement device, has a small structure, is convenient to mount, cooperates with the loading processing unit, conveniently measure the length of the round silicon rod, and also has relatively high measurement accuracy.

In some embodiments, as shown in Fig. 2A, the loading and unloading device further includes:

two square rod unloading assemblies 22,

wherein there are two round rod loading assemblies, and the two round rod loading assemblies and the two square rod unloading assemblies are disposed in parallel.

The loading process of the round silicon rod is as follows:

①, the long arm of the round rod loading rack is transversely placed on the loading and unloading support frame, and the silicon rod is loaded onto the round rod support mechanism;

②, the photoelectric switch fixed at the round rod loading rack detects and sends a material-presence signal, then the round rod clamping gas cylinder ventilates, and the round rod clamping gas cylinder drives, in motion, the round rod clamping block to rotate and pop up; then, the round rod clamping gas cylinder continues to drive the round rod clamping block to move, so as to push the silicon rod from one end face of the silicon rod, until the other end face of the silicon rod abuts against the round rod clamping gas cylinder for clamping and fixing; and

③, the loading turnover oil cylinder pushes the outer bottom of the round rod loading rack, so as to rotate around a shaft thereof, when the round rod loading rack is turned over to a position close to the deceleration proximity switch, the deceleration proximity switch detects in place, and the flow rate of the oil inlet of the loading turnover oil cylinder is adjusted by the loading processing unit, so as to reduce the turnover speed until the round rod loading rack is turned over by 90 degrees in place.

The unloading process of the square rod is as follows:

①, the square rod unloading assembly is erected at first, and the square rod formed by cutting is vertically placed on the square rod unloading assembly; and

②, an unloading turnover oil cylinder of the square rod unloading assembly retracts and turns over to a horizontal position.

Third component: the structure of the transfer device of the silicon rod cutting system

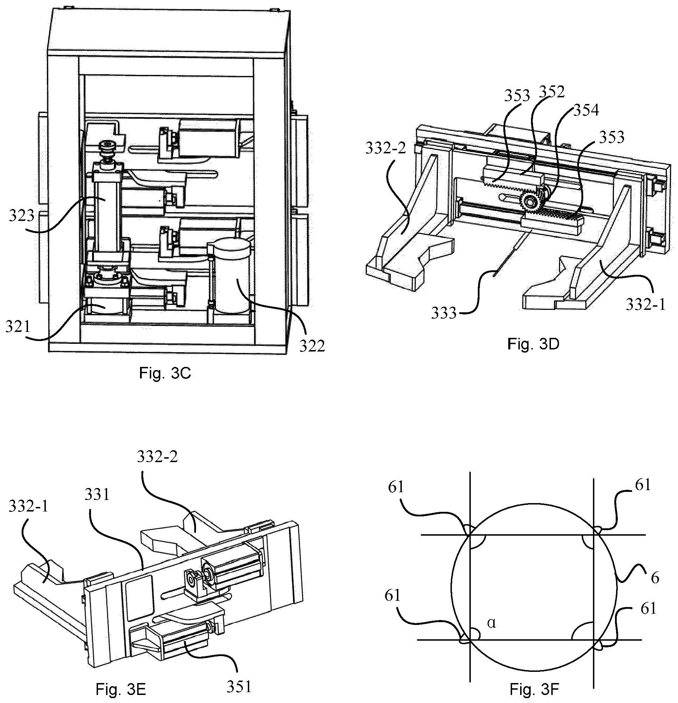

As shown in Fig. 1A, Fig. 1B, Fig. 1C, Fig. 3A, Fig. 3B and Fig. 3C, the transfer device 3 of the silicon rod cutting system includes:

a loading and unloading clamping jaw frame 31;

an upper clamping jaw assembly and a lower clamping jaw assembly, which are disposed on the same side of the loading and unloading clamping jaw frame 31 in parallel at intervals; and

a transfer driving assembly, which is configured to drive the upper clamping jaw assembly to move up and down in the vertical direction relative to the lower clamping jaw assembly, and is further configured to drive the upper clamping jaw assembly and the lower clamping jaw assembly to move up and down synchronously, wherein the upper clamping jaw assembly and the lower clamping jaw assembly move up and down in the vertical direction, that is, the Z direction of the silicon rod cutting system.

In some embodiments, the transfer driving assembly includes an upper clamping jaw transfer driving device, which is respectively fixed with the lower clamping jaw assembly and the upper clamping jaw assembly, and is configured to drive the upper clamping jaw assembly to move up and down relative to the lower clamping jaw assembly; and

a lower clamping jaw transfer driving device, which is respectively fixed with the loading and unloading clamping jaw frame and the lower clamping jaw assembly, and is configured to drive the lower clamping jaw assembly, the upper clamping jaw assembly and the upper clamping jaw transfer driving device to move up and down synchronously.

By means of the transfer driving assembly, two functions are realized, one is that the upper clamping jaw assembly can move upwards independently, so that the distance between the upper clamping jaw assembly and the lower clamping jaw assembly can be increased, and the upper clamping jaw assembly can also move downwards independently, so that the distance between the upper clamping jaw assembly and the lower clamping jaw assembly can be reset and reduced. In this way, when the silicon rod or the square rod is relatively short, there is no need to adjust the distance between the upper clamping jaw assembly and the lower clamping jaw assembly, and only the lower clamping jaw assembly is configured to clamp the silicon rod or the square rod; when the silicon rod or the square rod is relatively long, the distance between the upper clamping jaw assembly and the lower clamping jaw assembly can be kept unchanged, and the upper clamping jaw assembly and the lower clamping jaw assembly clamp the silicon rod or the square rod at the same time; and when the silicon rod or the square rod is extremely long, the distance between the upper clamping jaw assembly and the lower clamping jaw assembly can be increased to stably clamp the silicon rod or the square rod during transfer. The second function is that the transfer device clamps the silicon rod or the square rod, and when the silicon rod or the square rod needs to be lifted for rotation, the distance between the upper clamping jaw assembly and the upper clamping jaw assembly remains unchanged, and the upper clamping jaw assembly and the upper clamping jaw assembly move upwards synchronously, that is, lift up the clamped silicon rod or square rod, so as to transfer the silicon rod or square rod; and after the silicon rod or square rod is transferred in place, the distance between the upper clamping jaw assembly and the upper clamping jaw assembly remains unchanged, and the upper clamping jaw assembly and the upper clamping jaw assembly move downwards synchronously, that is, put down the clamped a square rod or a square rod.

In some embodiments, as shown in Fig. 3C, the transfer driving assembly includes:

a transfer gas-liquid cylinder 321, wherein a cylinder body of the transfer gas-liquid cylinder 321 is fixed on the bottom of the loading and unloading clamping jaw frame 31, and the upper end of the guide rod of the transfer gas-liquid cylinder 321 is fixed with the lower clamping jaw assembly;

a gas-liquid converter 322, which is connected with the transfer gas-liquid cylinder 321, wherein a gas entering the gas-liquid converter 322 squeezes a hydraulic oil into the transfer gas-liquid cylinder 321, so as to drive the guide rod of the transfer gas-liquid cylinder 321 to jack up the lower clamping jaw assembly, that is, the upper clamping jaw transfer driving device includes the transfer gas-liquid cylinder 321 and the gas-liquid converter 322; and

a transfer gas cylinder 323, wherein the cylinder body of the transfer gas cylinder 323 is fixed with the lower jaw assembly, and the upper end of the guide rod of the transfer gas cylinder 323 is fixed with the upper jaw assembly; and a gas source enters the gas of the transfer gas cylinder 323, so as to drive the guide rod of the transfer gas cylinder 323 to jack up the upper jaw assembly, that is, the lower clamping jaw transfer driving device includes the transfer gas cylinder 323.

The combination mode of the transfer gas-liquid cylinder and the transfer gas cylinder enables the structure of the transfer driving assembly to be relatively small, so that the overall structure of the transfer device is relatively small.

In some embodiments, when a relatively short silicon rod is clamped, the transfer gas cylinder resets and retracts, and the transfer gas-liquid cylinder extends out; and when a relatively short silicon rod is clamped, the transfer gas cylinder and the transfer gas-liquid cylinder extend out at the same time.

In some embodiments, if the length of the silicon rod is greater than or equal to 150mm and less than or equal to 400mm, at this time, only the lower clamping jaw assembly clamps the round silicon rod before cutting or the cut square rod, and then the transfer gas-liquid cylinder acts to lift up the silicon rod or the square rod for transfer.

When the length of the silicon rod is greater than 400mm and less than or equal to 850mm, the distance between the upper clamping jaw assembly and the lower clamping jaw assembly remains unchanged, and the upper clamping jaw assembly and the lower clamping jaw assembly jointly participate in clamping the round silicon rod before cutting or the square rod after cutting.

When the length of the silicon rod is greater than 850mm, the upper clamping jaw assembly and the lower clamping jaw assembly jointly participate in clamping the round silicon rod before cutting or the square rod after cutting, wherein the upper clamping jaw assembly moves up and down in the vertical direction of the loading and unloading clamping jaw frame due to the action of the transfer gas cylinder, so as to clamp round silicon rods before cutting or cut square rods of different lengths.

In some embodiments, as shown in Fig. 3A, Fig. 3D and Fig. 3E, each the upper clamping jaw assembly and the lower clamping jaw assembly respectively includes:

a transfer clamping jaw fixing plate 331;

a left clamping jaw 332-1 and a right clamping jaw 332-2, which are fixed on a front side of the transfer clamping jaw fixing plate 331 and are disposed opposite to each other, and the left clamping jaw 332-1 and the right clamping jaw 332-2 get close to and away from each other, so as to realize clamping and loosening, wherein the side of the transfer clamping jaw fixing plate where the left clamping jaw and the right clamping jaw are fixed is the front side of the transfer clamping jaw fixing plate; and

a silicon rod detection assembly, which is fixed on the front side of the transfer clamping jaw fixing plate 331, wherein a silicon rod detection probe 333 of the silicon rod detection assembly is disposed between the left clamping jaw 332-1 and the right clamping jaw 332-2;

the transfer device further includes a silicon rod detection processing unit, which is connected with the silicon rod detection assembly 333, wherein:

the silicon rod detection assembly is configured to keep a gap between the left clamping jaw 332-1 and the right clamping jaw 332-2 for getting away from the silicon rod, that is, not clamp the silicon rod, and when the bottom of the silicon rod is placed on the silicon rod support mechanism for rotating, the silicon rod detection probe 333-1 of the silicon rod detection assembly remains pressed on an outer peripheral surface of the silicon rod; and

the silicon rod detection processing unit is configured to obtain the position of a crystal line of the silicon rod according to a signal of the silicon rod detection probe of the silicon rod detection assembly, and judge whether the silicon rod meets a preset silicon rod standard.

In some embodiments, the silicon rod detection processing unit is configured to:

in the case that the number of the crystal lines of the silicon rod is less than 4 or greater than 4, judge that the silicon rod does not meet the preset silicon rod standard;

in the case that the number of the crystal lines of the silicon rod is four, as shown in Fig. 3F, among crystal line endpoints 61 of the four crystal lines of the silicon rod 6 on the end face of the silicon rod, the connecting lines of every two adjacent crystal line endpoints 61 form four cutting straight lines;

when four included angles α formed by the four cutting straight lines are all greater than or equal to 85 degrees and less than or equal to 95 degrees, judge that the silicon rod meets the preset silicon rod standard, and thus subsequent cutting is performed: when any of the four included angles formed by the four cutting straight lines is less than 85 degrees or greater than 95 degrees, judge that the silicon rod does not meet the preset silicon rod standard, that is, the crystal line of the silicon rod is too inclined. A square rod cannot be obtained even if after cutting, and thus subsequent cutting cannot be performed.

In this way, the silicon rod detection assembly cooperates with the silicon rod detection processing unit to judge whether the silicon rod meets the preset silicon rod standard, thereby avoiding cutting the silicon rod that does not meet the preset silicon rod standard, thus improving the efficiency and reducing the waste of time.

The silicon rod detection processing unit is further configured to:

judge the actual eccentricity of the silicon rod placed on the silicon rod support mechanism relative to the center of the silicon rod support mechanism, and if the actual eccentricity exceeds a preset allowable eccentricity range, adjust the position of the silicon rod; and

judge the actual inclination of the silicon rod placed on the silicon rod support mechanism, and if the actual inclination exceeds a preset allowable inclination range, perform manual judgement; and if it is determined by manual judgement that the actual inclination exceeds the preset allowable inclination range, not perform cutting.

The above processing process of the silicon rod detection unit needs to be performed on the basis of the signal of the silicon rod detection assembly.

In some embodiments, as shown in Fig. 3A, Fig. 3B and Fig. 3C, the transfer device further includes:

two vertical guide rails 341, which are vertically disposed in parallel on one side of the transfer clamping jaw fixing plate 331; and

two transfer clamping jaw slide blocks, which are fixed on a back side of the transfer clamping jaw fixing plate 331, wherein the transfer clamping jaw slide blocks are slidably connected with the vertical guide rails 341; and

the upper end of the guide rod of the transfer gas-liquid cylinder 321 is fixed with the transfer clamping jaw fixing plate of the lower clamping jaw assembly, and the upper end of the guide rod of the transfer gas cylinder 323 is fixed with the transfer clamping jaw fixing plate of the upper clamping jaw assembly.

The transfer gas-liquid cylinder drives the entire lower clamping jaw assembly to move up and down in the height direction of the loading and unloading clamping jaw frame relative to the loading and unloading clamping jaw frame. The transfer gas cylinder drives the entire upper clamping jaw assembly to move up and down in the vertical direction relative to the lower clamping jaw assembly.

In some embodiments, each of the upper clamping jaw assembly and the lower clamping jaw assembly further includes:

a synchronous reverse clamping jaw motion assembly, wherein the left clamping jaw and the right clamping jaw are disposed with the transfer clamping jaw fixing plate by means of the synchronous reverse clamping jaw motion assembly; and

the synchronous reverse clamping jaw motion assembly is configured to drive the left clamping jaw and the right clamping jaw to synchronously and reversely move, so as to get close to and away from each other.

In this way, the silicon rod can be conveniently clamped by the left clamping jaw and the right clamping jaw at the same time, and the silicon rod is loosened at the same time.

In some embodiments, as shown in Fig. 3D and Fig. 3E, the synchronous reverse clamping jaw motion assembly includes:

a transfer clamping jaw gas cylinder 351, wherein the cylinder body of the transfer clamping jaw gas cylinder 351 is fixed with the transfer clamping jaw fixing plate 331;

two connecting plates 352, wherein the upper end of the guide rod of the transfer clamping jaw gas cylinder 351 is fixed with one connecting plate;

two gear racks 353, wherein the gear racks 353 are respectively fixed on the opposite sides of the two connecting plates 352; and

a synchronization gear 354, which is engaged with the two gear racks 353.

In this way, the left clamping jaw and the right clamping jaw can conveniently clamp the silicon rod or the square rod at the same time.

In some embodiments, the transfer device further includes:

a transfer rotating mechanism, wherein the loading and unloading clamping jaw frame is fixed on the transfer rotating mechanism, and the transfer rotating mechanism is disposed on the machine base of the silicon rod cutting system and moves between the two cutting stations of the silicon rod cutting system; and

the transfer rotating mechanism is configured to drive the loading and unloading clamping jaw frame to rotate, is further configured to move between the two cutting stations of the silicon rod cutting system in the transverse direction of the silicon rod cutting system, and is further configured to move in the Y direction of the silicon rod cutting system, and the Y direction of the silicon rod cutting system is consistent with a front-back direction in which the transfer device gets close to and away from the loading and unloading device of the silicon rod cutting system.

The transfer rotating mechanism drives the loading and unloading clamping jaw frame to rotate, moves between the two cutting stations of the silicon rod cutting system, and also drives the loading and unloading clamping jaw frame to get close to and away from the loading and unloading device. In this way, the process of transferring the silicon rod to the cutting station and the process of transferring the cut square rod from the cutting station can be realized. The process of transferring the silicon rod to the cutting station includes:

turning the upper clamping jaw assembly and the lower clamping jaw assembly to the loading and unloading device, getting close to a silicon rod which is vertically carried on the loading and unloading device, clamping the silicon rod, and lifting up the silicon rod;

retracting and rotating, so that the silicon rod faces one of the cutting stations; and

getting close to one of the cutting stations in the X direction of the silicon rod cutting system, putting down the silicon rod, and loosening the same, so as to complete the transfer of one silicon rod.

The process of transferring the square rod formed by cutting from the cutting station includes:

turning the upper clamping jaw assembly and the lower clamping jaw assembly to one of the cutting stations, clamping the square rod formed by cutting, lifting up the square rod;

getting close to the loading and unloading device in the X-direction of the silicon rod cutting system, turning to the square rod unloading assembly of the loading and unloading device, and placing the square rod on the square rod unloading assembly, so as to complete the transfer of one square rod, wherein the square rod unloading assembly completes downloading subsequently.

In some embodiments, as shown in Fig. 3A, the transfer rotating mechanism includes a transfer motor, a transfer harmonic reducer and a rotating base 361. A flexible gear of the harmonic reducer is disposed on the rotating base 361 at the same time, and a steel wheel of the harmonic reducer is disposed on the loading and unloading clamping jaw frame, so that the transfer motor enables the loading and unloading clamping jaw frame to stably rotate on the rotating base by means of the transfer harmonic reducer, and since the transfer harmonic reducer eliminates a reverse gap, the transfer loading precision of the silicon rod is greatly improved. A rotating drag chain is disposed on the rotating base at the same time for rotary wiring and piping. The transfer harmonic speed reducer improves the transfer precision of the silicon rod to a great extent.

Fourth component: the structure of the cutting device of the silicon rod cutting system

The structure of the cutting handpiece mechanism 41

As shown in Fig. 1A, Fig. 1B and Fig. 1C, regarding to the two cutting stations of the silicon rod cutting system, each cutting station corresponds to one cutting device 4, and in one cutting process of one cutting device, the two transversely disposed parallel cutting segments of the cutting device cut the silicon rod from top to bottom, so as to form two flaw-pieces.

In order to conveniently take out the flaw-pieces after cutting, the cutting handpiece mechanism of the cutting device is structurally improved. As shown in Fig. 4A, Fig. 4B, Fig. 4C and Fig. 4D, the cutting device of the silicon rod cutting system includes the cutting handpiece mechanism 41, wherein the cutting handpiece mechanism is configured to form a cutting segment transversely disposed to cut a silicon rod vertically placed.

The cutting handpiece mechanism 41 includes a wire saw assembly; the wire saw assembly includes:

 a wire saw mounting rack 411, wherein the wire saw mounting rack 411 is provided with a vertical handpiece through hole 411-1; and

 a diamond wire, which is disposed on the front side of the wire saw mounting rack 411, wherein a part of the diamond wire configured to cut the silicon rod in motion is a cutting segment; and

 the cutting segment and the handpiece through hole 411-1 are disposed in a staggered mode, that is, they do not interfere with each other, and the handpiece through hole 411-1 is configured to enable a flaw-piece clamping jaw mounting column 511 of the flaw-piece clamping frame 51 of the flaw-piece clamping mechanism to enter and exit.

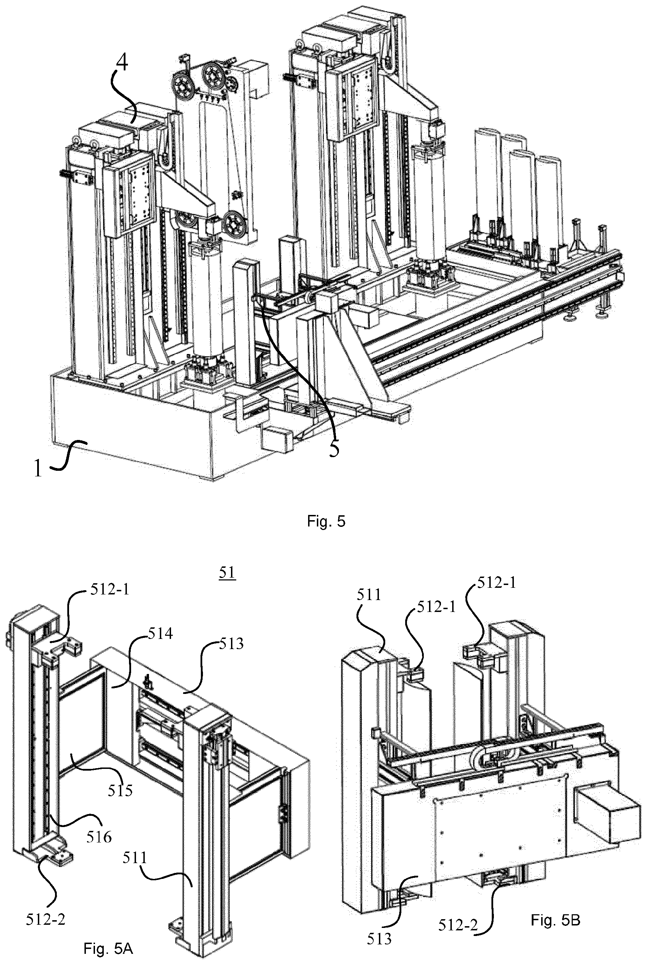

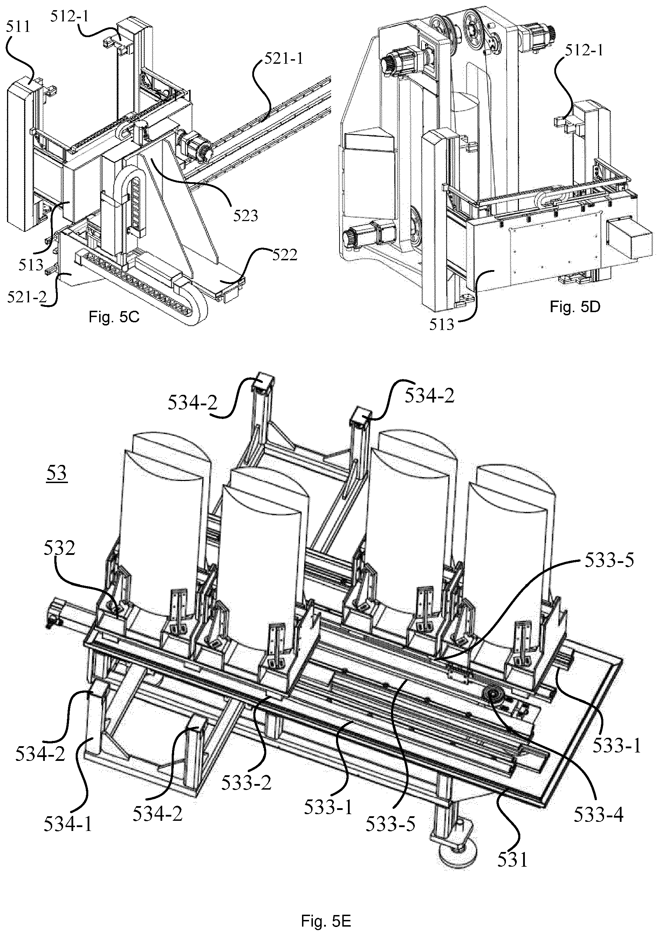

The structures of the flaw-piece clamping frame 51 and the flaw-piece clamping jaw mounting column 511 are described below in the fifth component. The cutting segment cuts the silicon rod to form a square rod and a flaw-piece, and the flaw-piece needs to be taken out. The process of taking out the flaw-piece is described in combination with Fig. 5A, Fig. 5B, Fig. 5C and Fig. 5D:

The flaw-piece clamping jaw mounting column 511 of the flaw-piece clamping frame 51 of the flaw-piece clamping mechanism passes through the handpiece through hole forwards, and the flaw-piece clamping mechanism clamps the flaw-piece; and then, the flaw-piece clamping jaw mounting column carrying the flaw-piece passes through the handpiece through hole 411-1 backwards, so as to remove the flaw-piece from the cutting station. During this process, there is no need to move the wire saw mounting rack itself. Regarding to the cutting device, since the wire saw mounting rack of the wire saw assembly of the cutting handpiece mechanism is provided with the handpiece through hole, there is no need to move the wire saw mounting rack during the process of removing the flaw-piece from the cutting station, thereby saving time, and improving the efficiency of removing the flaw-piece, such that the procedure of removing the flaw-piece from the cutting station is relatively simple, and accordingly, the efficiency of the silicon rod cutting system is relatively high.

In some embodiments, the handpiece through hole 411-1 is a vertically disposed strip-shaped handpiece through hole.

In some embodiments, the wire saw mounting rack is a rigid wire saw mounting rack.

In some embodiments, as shown in Fig. 4A, Fig. 4B, Fig. 4C and Fig. 4D, the cutting segment is a transversely disposed cutting segment and is lower than the handpiece through hole 411-1.

The cutting handpiece mechanism moves from top to bottom to cut the silicon rod. During the process when the cutting handpiece mechanism moves from top to bottom, the cutting segment disposed transversely cuts the silicon rod disposed vertically from top to bottom. After the cutting is completed, the cutting segment is lower than a lower end face of the silicon rod. At this time, during the process when the flaw-piece is removed from the cutting station by means of the handpiece through hole, since the cutting segment is lower than the handpiece through hole, the cutting segment does not interfere with the moving flaw-piece.

In some embodiments, as shown in Fig. 4A, the wire saw assembly further includes:

 a driving wheel assembly 412-1 and a lower transition wheel 412-2, which are respectively disposed on the front side of the wire saw mounting rack 411;

 a tension wheel assembly 412-3 and an upper transition wheel 412-4, which are respectively disposed on the front side of the wire saw mounting rack 411; and

an annular diamond wire, which is wound around outer peripheral surfaces of a driving wheel of the driving wheel assembly 412-1, the lower transition wheel 412-2, a tension wheel of the tension wheel assembly 412-3 and the upper transition wheel 412-4, the cutting segment is formed on the bottom ends of the driving wheel and the lower transition wheel, and the diamond wire and the handpiece through hole do not interfere with each other.

The driving wheel assembly is disposed on the lower part of the front side of the wire saw mounting rack. The tension wheel assembly applies a tension to the annular diamond wire, so that the annular diamond wire maintains a certain tension to effectively cut the silicon rod. The direction of the annular diamond wire is adjusted by the lower transition wheel and the upper transition wheel.

In some embodiments, as shown in Fig. 4B, Fig. 4C and Fig. 4D, one cutting station of the silicon rod cutting system corresponds to one cutting device, one cutting device includes two cutting handpiece mechanisms 41, and the cutting segments of the two cutting handpiece mechanisms 41 are disposed opposite to each other.

One cutting device is provided with two cutting handpiece mechanisms, and the cutting segments of the two cutting handpiece mechanisms 41 are disposed opposite to each other, in this way, one cutting device can cut the two opposite sides of the silicon rod, which is vertically disposed on the cutting station, so as to form two flaw-pieces with opposite positions, and thus the cutting efficiency of the silicon rod is relatively high.

In some embodiments, the two cutting handpiece mechanisms of one cutting device are disposed opposite to each other, that is, the cutting device includes a present-side cutting handpiece mechanism and an opposite-side cutting handpiece mechanism. Each of the cutting handpiece mechanisms further includes:

a cleaning assembly, which is fixed on the front side of the wire saw mounting rack,

wherein the cleaning assembly is provided with a plurality of cleaning nozzles, and a first part of cleaning nozzles is configured to clean the opposite-side cutting handpiece mechanism and the present-side cutting handpiece mechanism, and a second part of cleaning nozzles is configured to clean the opposite-side cutting handpiece mechanism.

The present-side cutting handpiece mechanism are also cleaned by the first part of cleaning nozzles of the present-side cutting handpiece mechanism, the first part of cleaning nozzles of the opposite-side cutting handpiece mechanism, and the second part of cleaning nozzles of the opposite-side cutting handpiece mechanism, so that the present-side cutting handpiece mechanism is cleaned by the cleaning nozzles in a plurality of directions, thus each cutting handpiece mechanism is cleaned by the cleaning nozzles in a plurality of directions, and accordingly, the cleaning efficiency is high. The cleaning assembly mainly cleans the opposite-side cutting handpiece mechanism, and also cleans the present-side cutting handpiece mechanism.

In some embodiments, as shown in Fig. 4A, the cleaning assembly includes:

a first lower cleaning assembly 413-1, which is fixed on the front side of the wire saw mounting rack 411 and is disposed above the driving wheel assembly 412-1, wherein the first part of cleaning nozzles of the first lower cleaning assembly is configured to clean the drive wheels of the driving wheel assemblies 412-1 of the opposite-side cutting handpiece mechanism and the present-side cutting handpiece mechanism, and the second part of cleaning nozzles is configured to clean the driving wheel of the driving wheel assembly of the opposite-side cutting handpiece mechanism; and

a second lower cleaning assembly 413-2, which is fixed on the front side of the wire saw mounting rack 411 and is disposed above the lower transition wheel 412-2, wherein the first part of cleaning nozzles of the second lower cleaning assembly is configured to clean the lower transition wheels 412-2 of the opposite-side cutting handpiece mechanism and the present-side cutting handpiece mechanism, and the second part of cleaning nozzles is configured to clean the lower transition wheel of the opposite-side cutting handpiece mechanism.

By means of adjusting the orientations of the first part of cleaning nozzles and the second part of cleaning nozzles of the first lower cleaning assembly, respective cleaning functions are realized. By means of adjusting the orientations of the first part of cleaning nozzles and the second part of cleaning nozzles of the second lower cleaning assembly, respective cleaning functions are realized.

In some embodiments, as shown in Fig. 4A, the cleaning assembly further includes:

a first upper cleaning assembly 413-3, which is fixed on the front side of the wire saw mounting rack 411 and is disposed above the tension wheel assembly 412-3, wherein the first part of cleaning nozzles of the first lower cleaning assembly is configured to clean the tension wheels of the tension wheel assemblies 412-3 of the opposite-side cutting handpiece mechanism and the present-side cutting handpiece mechanism, and the second part of cleaning nozzles is configured to clean the tension wheel of the tension wheel assembly of the opposite-side cutting handpiece mechanism; and

a second upper cleaning assembly 413-4, which is fixed on the front side of the wire saw mounting rack and is disposed above the upper transition wheel 412-3, wherein the first part of cleaning nozzles of the second upper cleaning assembly is configured to clean the upper transition wheels 412-3 of the opposite-side cutting handpiece mechanism and the present-side cutting handpiece mechanism, and the second part of cleaning nozzles is configured to clean the upper transition wheel of the opposite-side cutting handpiece mechanism.

By means of adjusting the orientations of the first part of cleaning nozzles and the second part of cleaning nozzles of the first upper cleaning assembly, respective cleaning functions are realized. By means of adjusting the orientations of the first part of cleaning nozzles and the second part of cleaning nozzles of the second upper cleaning assembly, respective cleaning functions are realized.

When the silicon rod is vertically placed on the cutting station, the positions of the first lower cleaning assembly and the second lower cleaning assembly are disposed outside the silicon rod, that is, the first lower cleaning assembly and the second lower cleaning assembly are respectively disposed to be staggered to the silicon rod, that is, the first lower cleaning assembly and the second lower cleaning assembly do not interfere with the silicon rod.

In this way, the first lower cleaning assembly and the second lower cleaning assembly clean the opposite-side cutting handpiece mechanism without being blocked by the silicon rod.

As shown in Fig. 4B, Fig. 4C and Fig. 4D, the first upper cleaning assembly 413-3 and the second upper cleaning assembly 413-4 are higher than the cut silicon rod.

In this way, the silicon rod is cleaned from the upper side of the silicon rod after cutting, and the cut silicon rod is cleaned from top to bottom during a downward flowing process of cleaning liquid.

In some embodiments, the cutting handpiece mechanism further includes:

a spray assembly, wherein the spray assembly is fixed on the front side of the wire saw mounting rack; the spray assembly performs spray within a preset front spray time before every cutting and in a spraying process; and

the spray assembly is provided with a spray nozzle, and the spray nozzle is configured to spray cutting fluid to the silicon rod and a cutting seam formed by cutting the silicon rod via the annular diamond wire, and perform cooling.

The spray nozzle of the spray assembly sprays the cutting fluid to the silicon rod and the cutting seam formed by cutting the silicon rod via the annular diamond wire, on one hand, it is conducive to cutting the silicon rod, and on the other hand, the annular diamond wire can also be cooled, thereby avoiding an excessively high temperature.

In some embodiments, as shown in Fig. 4A, the spray assembly includes:

a lower spray assembly 414-1, which is fixed on the front side of the wire saw mounting rack 411, wherein the lower spray assembly 414-1 is provided with a plurality of lower spray nozzles, which are disposed at intervals up and down, and the plurality of lower spray nozzles of the lower spray assembly 414-1 are configured to spray a cutting seam of the cutting segment for cutting the silicon rod; and

an upper spray assembly 414-2, which is fixed on the front side of the wire saw mounting rack 411 and is disposed between the tension wheel assembly 412-3 and the handpiece through hole 411-1, wherein the upper spray assembly 414-2 is provided with a plurality of upper spray nozzles, which are transversely disposed at intervals, and the plurality of upper spray nozzles of the upper spray assembly are configured to spray an upper end face of the silicon rod.

When being disposed above the silicon rod, the plurality of lower spray nozzles of the lower spray assembly spray the cutting fluid to the cutting seam of the cutting segment for cutting the silicon rod; and when the silicon rod starts to be cut, the cutting segment part of the annular diamond wire is sprayed. The plurality of upper spray nozzles of the upper spray assembly spray the cutting fluid to the upper end face of the silicon rod, so that the cutting is faster, and at the same time, as the cutting segment cuts the silicon rod from top to bottom, the cutting fluid also flows downwards along the cutting segment, thereby also cooling the annular diamond wire and the cutting segment.

As shown in Fig. 4E, the tension wheel assembly 412-3 includes a tension motor 412-31, a speed reducer 412-32, a tension swing rod 412-33 and a tension wheel 412-34. Due to the action of the speed reducer, it can be guaranteed that a small motor outputs a large torque, thereby saving the motor cost. The two sides of the tension swing rod are provided with limiting blocks, so that the tension swing rod rotates within a certain angle.

The structures of a support frame 44, a transverse feeding mechanism and a vertical feeding mechanism

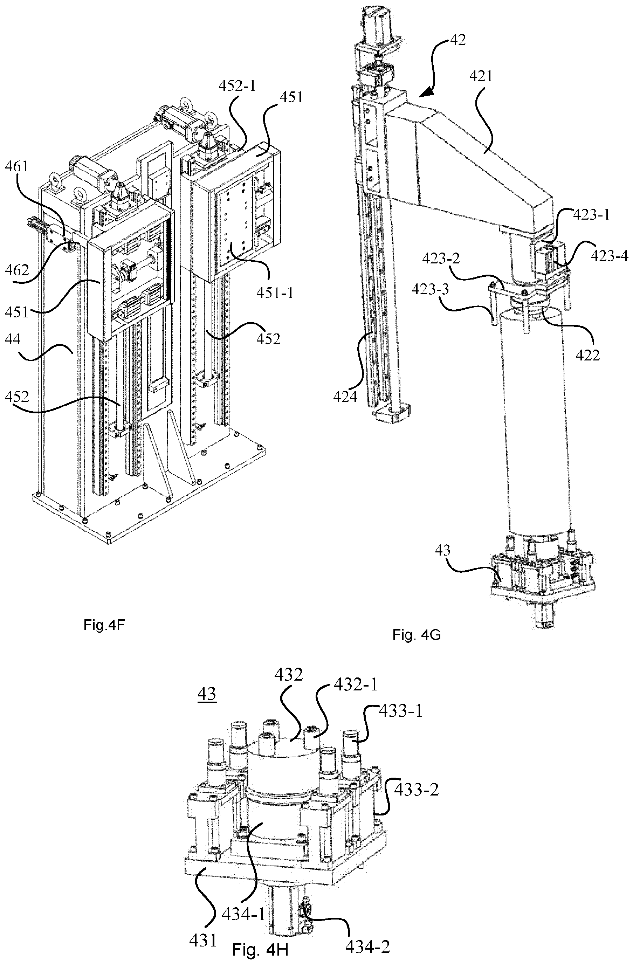

In some embodiments, as shown in Fig. 4F, the cutting device 4 further includes:

a support frame 44, which is disposed on the machine base 1 of the silicon rod cutting system; and

transverse feeding mechanisms 451, which are in one-to-one correspondence with the cutting handpiece mechanisms 41, wherein the cutting handpiece mechanisms are fixed with the corresponding transverse feeding mechanisms 451, the two cutting segments are disposed opposite to each other, and the transverse feeding mechanisms 451 are slidably connected with the support frame, so as to drive the two cutting segments to get close to and away from each other, wherein the transverse feeding mechanisms 451 are configured to drive the two cutting handpiece mechanisms 41 to move close to and away from each other, and adjust the distance between the cutting segments of the two cutting handpiece mechanisms of the same cutting device.

In this way, under the driving of the two transverse feeding mechanisms, the two cutting handpiece mechanisms of the same cutting device get close to and away from each other, so that the distance between the cutting segments of the two cutting handpiece mechanisms of the same cutting device is adjusted. That is, the two cutting segments of the same cutting handpiece mechanism are disposed in parallel, and the distance between the two cutting segments is adjustable. The resulting beneficial effect is that the cutting device is suitable for cutting silicon rods with various diameters, so that the universality of the cutting device is very high.

The transverse feeding mechanism and the vertical feeding mechanism form a feeding mechanism.

In some embodiments, as shown in Fig. 4F, the cutting device further includes:

vertical feeding mechanisms 452, which are in one-to-one correspondence with the transverse feeding mechanisms, and are vertically fixed on the same side of the support frame 44 respectively, wherein the vertical feeding mechanisms 452 are fixed with the corresponding transverse feeding mechanisms 451, so as to drive the cutting handpiece mechanisms to move in the vertical direction; and the two vertical feeding mechanisms 452 are configured to drive the two transverse feeding mechanisms to move in the vertical direction, so as to drive the cutting handpiece mechanisms to move in the vertical direction.

In this way, the vertical feeding mechanism drives the corresponding transverse feeding mechanism to move in the vertical direction, namely, the Z direction, so as to drive the cutting handpiece mechanism and the cutting segment thereof to move in the vertical direction, namely the Z direction, so that the vertically placed silicon rod is cut from top to bottom in the Z direction, and the cutting handpiece mechanism and the cutting segment thereof are driven to reset after each cutting is completed.

In some embodiments, as shown in Fig. 4F, the transverse feeding mechanism includes:

a wire saw transverse guide rail lead screw, wherein a nut of the wire saw transverse guide rail lead screw is fixed at the vertical feeding mechanism, and the guide direction of the guide rail of the wire saw transverse guide rail lead screw is a direction in which the two cutting segments get close to and away from each other;

a wire saw transverse slide plate 451-1, which is fixed with the slide block of the wire saw transverse guide rail lead screw and is fixed with the cutting handpiece mechanism; and

a wire saw transverse driving motor and a wire saw transverse speed reducer, wherein the wire saw transverse driving motor is connected with the wire saw transverse speed reducer, so as to output a rotary motion to the wire saw transverse guide rail lead screw; and

the wire saw transverse guide rail lead screw is configured to convert the received rotary motion into a linear motion along the guide rail of the wire saw transverse guide rail lead screw, and drive, by means of the slide block of the wire saw transverse guide rail lead screw and the wire saw transverse slide plate, the cutting handpiece mechanism to move in the transverse direction, that is, the X direction.

The wire saw transverse guide rail lead screw and the wire saw transverse slide plate realize the transverse feeding mechanism by means of a simple structure.

In some embodiments, as shown in Fig. 4F, the vertical feeding mechanism includes:

a wire saw vertical guide rail lead screw, wherein the nut of the wire saw vertical guide rail lead screw is fixed at the support frame, and the guide direction of the guide rail of the wire saw vertical guide rail lead screw is an upper-lower vertical direction, that is, the Z direction;

a wire saw vertical slide plate 452-1 , which is fixed with the slide block of the wire saw vertical guide rail lead screw and is fixed with the nut of the wire saw vertical guide rail lead screw; and

a wire saw vertical driving motor and a wire saw vertical speed reducer, wherein the wire saw vertical driving motor is connected with the wire saw vertical speed reducer, so as to output a rotary motion to the wire saw vertical guide rail lead screw; and

the wire saw vertical guide rail lead screw is configured to convert the received rotary motion into a linear motion along the guide rail of the wire saw vertical guide rail lead screw, and drive, by means of the slide block of the wire saw vertical guide rail lead screw, the transverse feeding mechanism and the cutting handpiece mechanism to move in the vertical direction.

The nut of the wire saw vertical guide rail lead screw and the support frame are fixed into a whole, which is fixed relative to the machine base. The slide block of the wire saw vertical guide rail lead screw and the nut of the wire saw transverse guide rail lead screw are fixed into a whole. The slide block of the wire saw vertical guide rail lead screw, the wire saw vertical slide plate and the nut of the wire saw transverse guide rail lead screw move in the vertical direction as a whole, so as to drive the transverse feeding mechanism to move in the vertical direction, thereby driving the cutting handpiece mechanism and the cutting segment thereof to move in the vertical direction.

In some embodiments, the cutting device further includes:
a feeding control unit, which is respectively connected with the two wire saw transverse driving motors and the two vertical wire saw driving motors of the same cutting device, is configured to control the distance between the cutting segments of the two cutting handpiece mechanisms, and is further configured to control the motion of the two cutting handpiece mechanisms in the vertical direction.

By means of the cooperation of the feeding control unit, the wire saw transverse driving motor and the vertical wire saw driving motor, the distance between the cutting segments of the two cutting handpiece mechanisms in the transverse direction can be conveniently controlled, and the motion of the cutting segments of the two cutting handpiece mechanisms in the vertical direction is also realized for cutting, that is, the cutting is controlled.

In some embodiments, as shown in Fig. 4F, the vertical feeding mechanism further includes:

a blocking latch 461, wherein a socket of the blocking latch 461 is fixed at the upper part of a side face of the support frame 44; and

a blocking strip 462, which is transversely fixed at the wire saw vertical slide plate 452-1,

wherein the blocking latch is configured to, when the cutting handpiece mechanism moves to the highest position, enable a plug of the blocking latch to extend out to block the blocking strip from moving downwards, so as to prevent the wire saw vertical slide plate and the cutting handpiece mechanism from moving downwards.

By means of the cooperation of the blocking latch and the blocking strip, the downward motion of the wire saw vertical slide plate is realized by means of a mechanical structure. When the cutting handpiece mechanism moves to the highest position, there is a need for a person to enter the lower side of the cutting handpiece mechanism to maintain the equipment, the cutting handpiece mechanism accidentally fall, causing personnel injury. By means of the mechanical blocking realized by the cooperation of the blocking latch and the blocking strip, it is ensured that the cutting handpiece mechanism does not fall accidentally.

The structure of a silicon rod chuck mechanism 42

In some embodiments, as shown in Fig. 4G, the cutting device includes a silicon rod chuck mechanism 42, wherein the silicon rod chuck mechanism 42 includes:

a chuck rack 421;

an upper floating head 422, which is disposed at the chuck rack 421 for pressing the upper end face of the vertically placed silicon rod; and

a flaw-piece support frame, which is connected with the chuck rack 421 and extending out downwards and resetting upwards, wherein the flaw-piece support frame is configured to extend out downwards and support the outer peripheral surface of the silicon rod, and the flaw-piece support frame is further configured to reset upwards to leave the outer peripheral surface of the silicon rod.

The chuck rack is a mounting basis. The upper floating head is configured to pressing the upper surface of the vertically placed silicon rod, so as to clamp the silicon rod in the vertical direction. When the silicon rod is cut, the upper floating head itself is inclined for a preset angle, so as to reduce or cancel a stress generated by cutting. In order to prevent the flaw-piece formed by the cut silicon rod from toppling over, the flaw-piece support frame is provided. The flaw-piece support frame is connected with the chuck rack and extending out downwards and resetting upwards. In this way, after the cutting segment is placed on the upper end face of the silicon rod, the flaw-piece support frame extends out downwards and supports the outer peripheral surface of the silicon rod, so that the cutting segment cuts the silicon rod to form a square rod and a flaw-piece, the flaw-piece is supported by the flaw-piece support frame on the outer side of the upper end, thereby avoiding the possibility of the flaw-piece toppling over. When the flaw-piece needs to be taken away, the flaw-piece support frame is reset upwards and is no longer in contact with the flaw-piece, so that the flaw-piece can be taken away.

In some embodiments, the chuck rack is a rigid chuck rack.

In some embodiments, the chuck rack moves up and down, and the upper floating head is configured to press the upper end face of the vertically placed silicon rod.

In some embodiments, the upper floating head is disposed on a downward end face of the chuck rack.

In this way, the upper floating head conveniently press the upper end face of the silicon rod placed vertically, and also conveniently leave the upper end face of the cut silicon rod.

In some embodiments, as shown in Fig. 4G, the flaw-piece support frame includes:

a flaw-piece support frame mounting member 423-1, which is fixed with the chuck rack;

a handrail fixing member 423-2 and a flaw-piece handrail 423-3, wherein the flaw-piece handrail 423-3 is fixed on one side of the handrail fixing member 423-2 that is away from the upper floating head and extends out downwards; and

a flaw-piece support driving device, which is respectively connected with the flaw-piece support frame mounting member and the handrail fixing member, and is configured to drive the handrail fixing member and the flaw-piece handrail to extend out downwards and reset upwards.

In some embodiments, as shown in Fig. 4G, the flaw-piece support driving device is a flaw-piece support driving gas cylinder 423-4, the cylinder body of the flaw-piece support driving gas cylinder is fixed with the flaw-piece support frame mounting member 423-1, the guide rod of the flaw-piece support driving gas cylinder is fixed with the handrail fixing member 423-2, and the guide rod of the flaw-piece support driving gas cylinder stretches out and draws back to drive the handrail fixing member 423-2 and the flaw-piece handrail 423-3 to extend out downwards and reset upwards.

The handrail fixing member and the flaw-piece handrail are fixed as a whole, which is connected with the flaw-piece support frame mounting member by means of the flaw-piece support driving gas cylinder. The guide rod of the flaw-piece support driving gas cylinder extends out, the handrail fixing member and the flaw-piece handrail extend out downwards as a whole, and the flaw-piece handrail supports the outer peripheral surface of the silicon rod. The guide rod of the flaw-piece support driving gas cylinder retracts, and the handrail fixing member and the flaw-piece handrail retract upwards as a whole, so as to drive the flaw-piece handrail to retract upwards to leave the silicon rod.

In some embodiments, as shown in Fig. 4G, four flaw-piece handrails 423-3 are fixed around one handrail fixing member 423-2.

In this way, two flaw-pieces are supported on the outer peripheral surface of the silicon rod by the four flaw-piece handrails of one handrail fixing member, and each flaw-piece is supported by two flaw-piece handrails.

After the cutting segment is placed on the upper end face of the vertically placed silicon rod, the flaw-piece handrail extends out downwards to support the outer peripheral surface of the silicon rod. After single cutting is completed, the flaw-piece handrail retracts upwards, and the two flaw-pieces are removed.

In some embodiments, as shown in Fig. 4G, the silicon rod chuck mechanism further includes:

a chuck rack vertical-motion assembly 424, which is fixed with the support frame 44 and is disposed between the two cutting handpiece mechanisms 41,

wherein the chuck rack is connected with the chuck rack vertical-motion assembly, the chuck rack vertical-motion assembly is configured to drive the chuck rack to move up and down in the vertical direction, that is, the Z direction, so as to drive the upper floating head to press on the upper end face of the silicon rod placed vertically and to leave the upper end face of the cut silicon rod.

The structure of a silicon rod support mechanism 43

In some embodiments, as shown in Fig. 4H, the cutting device further includes a silicon rod support mechanism 43, which is configured to support the lower end face of the vertically placed silicon rod, and the silicon rod support mechanism 43 is fixed at the cutting station. The silicon rod support mechanism includes:

a silicon rod support mounting base 431, wherein the silicon rod support mounting base 431 is fixed at the machine base of the silicon rod cutting system, that is, the silicon rod support mechanism is fixed at a position corresponding to one cutting station on the machine base; and

a lower floating head 432, which is configured to support the lower end face of the vertical silicon rod, wherein the lower floating head is disposed above the silicon rod support mounting base 431.

In this way, during the process when the silicon rod is cut, the lower floating head itself is inclined for a preset angle, so as to reduce or cancel the stress generated by cutting. When the cutting segment of the cutting handpiece mechanism performs cutting from top to bottom, the stress generated by cutting can be reduced or canceled by the inclination of the lower floating head, thereby preventing edge breakage when the lower part of the silicon rod is cut.

In some embodiments, as shown in Fig. 4H, the silicon rod support mechanism further includes a flaw-piece support assembly, wherein the flaw-piece support assembly includes:

a flaw-piece support driving device, which is fixed on the silicon rod support mounting base 431 and is spaced apart from the lower floating head;

a flaw-piece support head 433-1, which is configured to support a position where the flaw-piece is formed after the lower end face of the silicon rod is cut, wherein the flaw-piece support head 433-1 is fixed on a top end of the flaw-piece support driving device; and when the flaw-piece support driving device is configured to lock when the silicon rod is cut into the square rod and the flaw-piece, so that the flaw-piece support head keeps the height to support the flaw-piece.

The process of placing the silicon rod on the silicon rod support mechanism is as follows:

first, the flaw-piece support head is disposed at an initial position, and the top end of the flaw-piece support head at the initial position is lower than the top end of a lower floating head support head;

then, the silicon rod is placed on the lower floating head, and the lower floating head support head supports the lower end face of the silicon rod; and

afterwards, the flaw-piece support head jacks upwards, the flaw-piece support driving device locks the height of the flaw-piece support head.

When the cutting segment of the cutting handpiece mechanism 41 performs cutting from top to bottom, the stress generated by cutting drives the lower floating head to slightly incline, and the flaw-piece support head always supports the flaw-piece. In this way, by means of the cooperation of the lower floating head and the flaw-piece support head, the stress generated by cutting is reduced or canceled, thereby preventing edge breakage when the lower part of the silicon rod is cut.

In some embodiments, the flaw-piece support driving device is a flaw-piece support gas cylinder 433-2; and the cylinder body of the flaw-piece support gas cylinder 433-2 is fixed with the silicon rod support mounting base 431, and the guide rod of the flaw-piece support gas cylinder 433-2 is fixed with the flaw-piece support head 433-1.

In some embodiments, as shown in Fig. 4H, the lower floating head is provided with three upward-protruding lower floating head support heads 433-1, and the three lower floating head support heads 433-1 are disposed at three vertexes of a triangle. The three lower floating head support heads determine a plane, so that each of the three lower floating head support heads supports the lower end face of the silicon rod.

In some embodiments, the upper floating head is provided with three downward-protruding upper floating head pressing heads, and the three upper floating head pressing heads are disposed at three vertexes of a triangle. The three upper floating head pressing heads determine a plane, so that each of the three upper floating head pressing heads presses the lower end face of the silicon rod.

When the cutting segment of the cutting handpiece mechanism performs cutting from top to bottom, the slight inclination of the lower floating head which is caused by the stress generated by cutting is compensated by the upper floating head, so that the silicon rod is stably clamped between the lower floating head and the upper floating head.

In some embodiments, four flaw-piece support assemblies are provided, and the four flaw-piece support assemblies are disposed at four vertexes of a rectangle; and two flaw-piece support assemblies are configured to support one flaw-piece which is formed by cutting one silicon rod.

A pair of flaw-piece support assemblies effectively support one flaw-piece.

In some embodiments, as shown in Fig. 4H, the silicon rod support mechanism further includes a silicon rod rotating assembly, wherein the silicon rod rotating assembly includes:

a silicon rod rotating shaft 434-1, wherein the lower floating head is fixed on the silicon rod rotating shaft 434-1, and the silicon rod rotating shaft 434-1 is rotatably connected to the silicon rod support mounting base 431; and

a silicon rod driving motor 434-2, which is fixed below the silicon rod support mounting base 431 and is connected with the silicon rod rotating shaft 434-1, so as to drive the silicon rod rotating shaft 434 to rotate.

When the silicon rod is cut for the first time to form two flaw-pieces, after the two flaw-pieces are removed, the flaw-piece support head moves downwards to reset. The silicon rod driving motor drives the silicon rod rotating shaft to rotate by 90 degrees, so as to drive the lower floating head and the silicon rod sandwiched between the lower floating head and the upper floating head to rotate by 90 degrees. In order to enable the silicon rod to rotate by 90 degrees, the silicon rod driving motor actively drives the silicon rod rotating shaft to rotate by 90 degrees, and the silicon rod passively rotates by 90 degrees, so as to prepare for subsequent second-time cutting.

Fifth component: the structure of a flaw-piece unloading device 5 of the silicon rod cutting system

As shown in Fig. 1A and Fig. 5, two cutting devices 4 are fixed on the machine base 1, the cutting device 4 is used for cutting the silicon rod from top to bottom, so as to form a square rod and a flaw-piece, and the flaw-piece unloading device 5 unloads the flaw-piece.

In some embodiments, as shown in Fig. 1A, Fig. 5, Fig. 5A, Fig. 5B, Fig. 5C and Fig. 5D, the flaw-piece unloading device 5 of the silicon rod cutting system includes:

a flaw-piece clamping mechanism; and

a flaw-piece collection mechanism 53,

wherein the flaw-piece clamping mechanism is configured to clamp a flaw-piece formed by cutting the silicon rod into the square rod, and convey the flaw-piece to the flaw-piece collection mechanism 53 for storage.

In some embodiments, the flaw-piece collection mechanism 53 has collection areas, and the collection areas are in one-to-one correspondence with the cutting stations of the silicon rod cutting system;
the flaw-piece unloading device further includes a collection control unit, and the collection control unit is configured to control the flaw-piece clamping mechanism to clamp the flaw-pieces generated by the cut silicon rod from the cutting stations, and convey the flaw-pieces into the flaw-piece collection mechanism, and the flaw-pieces generated by cutting the same silicon rod are placed in the same collection area.

According to the flaw-piece unloading device of the silicon rod cutting system in the embodiments of the disclosure, the flaw-piece collection mechanism is divided into the collection areas, and the collection areas are in one-to-one correspondence with the cutting stations of the silicon rod cutting system. By means of the collection control unit, the flaw-piece clamping mechanism is controlled to clamp the flaw-pieces generated by the cut silicon rod on the cutting stations and to convey the flaw-pieces to the collection orders in the flaw-piece collection mechanism for storage, the flaw-pieces generated by cutting the same silicon rod are placed in the same collection area, that is, the four flaw-pieces generated by cutting the same silicon rod into the square rod are placed in the same collection area of the flaw-piece collection mechanism, therefore a basis is provided for meeting the requirements of subsequent identifier pasting and subsequent management of the four flaw-pieces generated by the same silicon rod.

In some embodiments, the silicon rod is encoded to form a silicon rod code, so as to distinguish each silicon rod. The silicon rod is cut to form one square rod and four flaw-pieces, and the four flaw-pieces from the same silicon rod are collected in the same collection area of the flaw-piece collection mechanism. In this way, the flaw-pieces placed in the same collection area are from the same silicon rod, which facilitates subsequent encoding of the flaw-pieces, and the code of the flaw-piece includes a silicon rod code and a digital code, in some embodiments, a silicon rod code-1 , a silicon rod code-2, a silicon rod code-3 and a silicon rod code-4.

The structure of the flaw-piece clamping mechanism 51

In some embodiments, as shown in Fig. 5A, Fig. 5B, Fig. 5C and Fig. 5D, the flaw-piece clamping mechanism includes a flaw-piece clamping frame 51, wherein the flaw-piece clamping frame 51 includes:

a flaw-piece clamping jaw mounting column 511;

a top clamping jaw 512-1 and a bottom clamping jaw 512-2, which are disposed on the front side of the flaw-piece clamping jaw mounting column 511 and are opposite to each other up and down; and

at least one of the top clamping jaw 512-1 and the bottom clamping jaw 512-2 is slidably connected with the flaw-piece clamping jaw mounting column, and moves up and down in the vertical direction, that is, the Z direction of the silicon rod cutting system, and the side of the flaw-piece clamping jaw mounting column where the top clamping jaw 512-1 and the bottom clamping jaw 512-2 are disposed is the front side.

Regarding to the flaw-piece clamping frame of the flaw-piece clamping mechanism, the flaw-piece clamping jaw mounting column is the mounting basis of the top clamping jaw and the bottom clamping jaw. At least one of the top clamping jaw 512-1 and the bottom clamping jaw 512-2 is slidably connected with the flaw-piece clamping jaw mounting column, in this way, the distance between the top clamping jaw 512-1 and the bottom clamping jaw 512-2 can be adjusted. When the vertical flaw-piece needs to be clamped, the distance between the top clamping jaw and the bottom clamping jaw is adjusted to be greater than the vertical flaw-piece to be clamped at first; then, the top clamping jaw and the bottom clamping jaw are disposed on the two ends of the vertical flaw-piece; and afterwards, the distance between the top clamping jaw and the bottom clamping jaw is adjusted in the Z direction of the silicon rod cutting system, so that the top clamping jaw and the bottom clamping jaw clamp two end faces of the flaw-piece, and thus the clamping the vertical flaw-piece in the upper-lower direction is realized.

In some embodiments, the flaw-piece clamping jaw mounting column is a rigid flaw-piece clamping jaw mounting column.

In some embodiments, as shown in Fig. 5A, Fig. 5B, Fig. 5C and Fig. 5D, the bottom clamping jaw 512-2 is fixed on the bottom end of the flaw-piece clamping jaw mounting column 511; and
the top clamping jaw 512-1 is slidably connected with the flaw-piece clamping jaw mounting column, and the top clamping jaw 512-1 moves up and down in the vertical direction, that is, the Z direction of the silicon rod cutting system.

The bottom clamping jaw is fixed on the bottom end of the flaw-piece clamping jaw mounting column, the top clamping jaw is slidably disposed on the upper part of the mounting column, and the top clamping jaw and the bottom clamping jaw are disposed opposite to each other. In this way, the top clamping jaw moves up and down in the vertical direction, that is, the Z direction of the silicon rod cutting system, so that the distance between the top clamping jaw and the bottom clamping jaw can be adjusted. When the vertical flaw-piece needs to be clamped, the distance between the top clamping jaw and the bottom clamping jaw is adjusted to be greater than the flaw-piece to be clamped at first, and the bottom clamping jaw carries the lower end face of the vertical flaw-piece; then, the top clamping jaw moves downwards in the Z direction until pressing the upper end face of the flaw-piece; and at this time, the clamping of the flaw-piece is realized.

In some embodiments, as shown in Fig. 5A, Fig. 5B, Fig. 5C and Fig. 5D, the flaw-piece clamping frame 51 further includes:

a flaw-piece clamping jaw back plate 513 disposed vertically;

a flaw-piece clamping jaw slide plate 514, wherein the flaw-piece clamping jaw slide plate 514 is disposed on one plate surface of the flaw-piece clamping jaw back plate 513 and is slidably connected with the flaw-piece clamping jaw back plate 513, the flaw-piece clamping jaw back plate 513 moves in the horizontal direction along the flaw-piece clamping jaw back plate, and the motion direction of the flaw-piece clamping jaw slide plate is consistent with the X direction of the silicon rod cutting system where the flaw-piece unloading device is disposed; and

a flaw-piece clamping jaw mounting column fixing plate 515, wherein two opposite end sides of the flaw-piece clamping jaw mounting column fixing plate 515 are respectively fixed with the flaw-piece clamping jaw slide plate 514 and the flaw-piece clamping jaw mounting column 511, so that the flaw-piece clamping jaw mounting column 511, the flaw-piece clamping jaw mounting column fixing plate 515 and the flaw-piece clamping jaw slide plate 514 are fixed into a whole,

wherein the flaw-piece clamping jaw slide plate 514 moves left and right in the X direction of the silicon rod cutting system, so as to drive the top clamping jaw 512-1 and the bottom clamping jaw 512-2, which are disposed on the flaw-piece clamping jaw mounting column 511, to move left and right in the X direction of the silicon rod cutting system.

The flaw-piece clamping jaw mounting column, the flaw-piece clamping jaw mounting column fixing plate and the flaw-piece clamping jaw slide plate are fixed into a whole, and move left and right in the X direction of the silicon rod cutting system as a whole, so that the top clamping jaw and the bottom clamping jaw, which are disposed on the same flaw-piece clamping jaw mounting column, can move left and right in the X direction of the silicon rod cutting system as a whole. In this way, the flaw-piece clamping mechanism can move left and right in the X direction of the silicon rod cutting system, so as to enable the top clamping jaw and the bottom clamping jaw, which are disposed on the same flaw-piece clamping jaw mounting column, to get close to the vertical flaw-piece to be clamped in the X direction of the silicon rod cutting system.

In some embodiments, as shown in Fig. 5A, Fig. 5B, Fig. 5C and Fig. 5D, two flaw-piece clamping jaw mounting columns 511 are provided, and the top clamping jaw 512-1 and the bottom clamping jaw 512-2 are disposed on the front side of each flaw-piece clamping jaw mounting column 511; two flaw-piece clamping jaw mounting column fixing plates 515 are provided for respectively fixing one of the flaw-piece clamping jaw mounting columns 511; and two flaw-piece clamping jaw slide plates 514 are provided to be respectively fixed with one of the flaw-piece clamping jaw mounting column fixing plates 515; wherein the front sides of the two flaw-piece clamping jaw mounting columns 511 are disposed opposite to each other.

In this way, since the front sides of the two flaw-piece clamping jaw mounting columns are disposed opposite to each other, the distance between the top clamping jaw and the bottom clamping jaw, which are disposed on the two flaw-piece clamping jaw mounting columns, can be adjusted in the X direction of the silicon rod cutting system. When the same silicon rod is cut into the square rod, the clamping of two opposite flaw-pieces are suitable for being clamped.

In some embodiments, as shown in Fig. 5A, Fig. 5B, Fig. 5C and Fig. 5D, the flaw-piece clamping frame 51 further includes:

a top clamping jaw Z-direction guide rail 516, wherein each of the flaw-piece clamping jaw mounting columns 511 is provided with two top clamping jaw Z-direction guide rails 516 disposed in parallel, and the guide direction of the top clamping jaw Z-direction guide rail 516 is the vertical direction and is consistent with the Z direction of the silicon rod cutting system;

a top clamping jaw Z-direction slide block, which is disposed on the back side of the top clamping jaw 512-1; and

a top clamping jaw Z-direction motion gas cylinder, which is fixed at the flaw-piece clamping jaw mounting column 511, wherein a piston rod of the top clamping jaw Z-direction motion gas cylinder is fixed with the back side of the top clamping jaw,

wherein the top clamping jaw Z-direction motion gas cylinder is configured to push the top clamping jaw 512-1 to move up and down along the top clamping jaw Z-direction guide rail in the vertical direction, that is, the Z direction of the silicon rod cutting system.

In this way, by means of the cooperation of the top clamping jaw Z-direction guide rail, the top clamping jaw Z-direction slide block and the top clamping jaw Z-direction motion gas cylinder, the top clamping jaw can move up and down in the vertical direction via a simple structure.

In some embodiments, the flaw-piece clamping frame further includes:

a clamping jaw X-direction guide rail, wherein a plate surface of the flaw-piece clamping jaw back plate that is close to the flaw-piece clamping jaw slide plate is provided with two clamping jaw X-direction guide rails disposed in parallel, and the guide direction of the clamping jaw X-direction guide rail is consistent with the X direction of the silicon rod cutting system;

a clamping jaw X-direction slide block, which is disposed on a plate surface of the flaw-piece clamping jaw slide plate that is close to the flaw-piece clamping jaw back plate; and

a clamping jaw X-direction motion gas cylinder, which is fixed at the flaw-piece clamping jaw back plate, wherein the piston rod of the clamping jaw X-direction motion gas cylinder is fixed with the flaw-piece clamping jaw slide plate,

wherein the clamping jaw X-direction motion gas cylinder is configured to push the flaw-piece clamping jaw slide plate to move along the clamping jaw X-direction guide rail, so as to enable the top clamping jaw and the bottom clamping jaw, which are disposed on one flaw-piece clamping jaw mounting column fixing plate, to get close to or away from, in the X direction, the top clamping jaw and the bottom clamping jaw, which disposed on the other flaw-piece clamping jaw mounting column fixing plate.

In this way, by means of the cooperation of the clamping jaw X-direction guide rail, the clamping jaw X-direction slide block and the clamping jaw X-direction motion gas cylinder, the flaw-piece clamping jaw mounting column fixing plate can move left and right in the X direction of the silicon rod cutting system via a simple structure, so that the top clamping jaw and the bottom clamping jaw, which are disposed on one flaw-piece clamping jaw mounting column fixing plate, can get close to or away from, in the X direction of the silicon rod cutting system, the top clamping jaw and the bottom clamping jaw, which disposed on the other flaw-piece clamping jaw mounting column fixing plate.

In some embodiments, as shown in Fig. 5A, Fig. 5B, Fig. 5C and Fig. 5D, the height of the flaw-piece clamping jaw mounting column fixing plate 515 is less than the height of the flaw-piece clamping jaw mounting column 511, and the height of the flaw-piece clamping jaw back plate 513 is less than the height of the flaw-piece clamping jaw mounting column 511.

The requirement for the height of the flaw-piece clamping jaw mounting column fixing plate is relatively high, so as to adapt to flaw-pieces generated by silicon rods of various heights. In order to reduce the weight and reduce material consumption, the heights of the flaw-piece clamping jaw mounting column fixing plate, the flaw-piece clamping jaw slide plate and the flaw-piece clamping jaw back plate are all less than the height of the flaw-piece clamping jaw mounting column.

In some embodiments, as shown in Fig. 5A, Fig. 5B, Fig. 5C and Fig. 5D, the flaw-piece clamping jaw mounting column fixing plate 515 is fixed at a middle position of the flaw-piece clamping jaw mounting column 511, and the ratio of the length of the flaw-piece clamping jaw mounting column fixing plate 515 in the Z direction to the height of the flaw-piece clamping jaw mounting column 511 is greater than or equal to one third and less than two thirds.

In this way, the position where the flaw-piece clamping jaw mounting column fixing plate applies a force to the flaw-piece clamping jaw mounting column is at the middle position of the height of the flaw-piece clamping jaw mounting column, so that when the flaw-piece clamping mechanism clamps flaw-pieces generated by silicon rods with various heights, the clamping is relatively stable, and the flaw-piece clamping jaw mounting column fixing plate is not prone to damage and deformation.

In some embodiments, the fixing among the flaw-piece clamping jaw mounting column fixing plate, the flaw-piece clamping jaw mounting column and the flaw-piece clamping jaw slide plate is a detachable connection.

The three components, that is, the flaw-piece clamping jaw mounting column, the flaw-piece clamping jaw mounting column fixing plate and the flaw-piece clamping jaw slide plate are fixed in a detachable connection manner, so that the requirement for manufacturing precision is relatively low. At the same time, when any component is damaged, in some embodiments, when the flaw-piece clamping jaw mounting column fixing plate which bears a relatively large a downward acting force in the large Z direction is damaged, only the damaged component needs to be replaced.

In some embodiments, the flaw-piece clamping mechanism further includes:

a clamping frame motion assembly, which is fixed with the flaw-piece clamping jaw back plate and is disposed on the machine base of the silicon rod cutting system, wherein the Y direction of the silicon rod cutting system is perpendicular to the X direction and the Z direction of the silicon rod cutting system; and

the clamping frame motion assembly is configured to drive the clamping frame to linearly reciprocate in three directions of the silicon rod cutting system, that is, the X direction, the Y direction and the Z direction.

In some embodiments, as shown in Fig. 5C, the clamping frame motion assembly includes:

a clamping frame X-direction guide rail 521-1, which is fixed on an upper surface of the machine base of the silicon rod cutting system, wherein the guide direction of the clamping frame X-direction guide rail is consistent with the X direction of the silicon rod cutting system;

a clamping frame X-direction mounting base 521-2; and

a clamping frame X-direction motion slide block, which is fixed on the outer bottom of the clamping frame X-direction mounting base, wherein the clamping frame X-direction motion slide block cooperates with a clamping frame X-direction motion guide rail; and

the clamping frame X-direction mounting base moves along the clamping frame X-direction guide rail in the X direction of the silicon rod cutting system, so as to drive the clamping frame to move in the X direction of the silicon rod cutting system.

In some embodiments, as shown in Fig. 5C, the clamping frame motion assembly further includes:

a clamping frame Y-direction mounting base 522; and

a clamping frame Y-direction gear rack and a clamping frame Y-direction gear, which are engaged with each other, wherein the clamping frame Y-direction gear rack is fixed on the upper surface of the clamping frame X-direction mounting base; and the guide direction of the clamping frame Y-direction gear rack is consistent with the Y direction of the silicon rod cutting system, and the clamping frame Y-direction gear is fixed on the outer bottom of the clamping frame Y-direction mounting base.

In some embodiments, as shown in Fig. 5C, the clamping frame motion assembly further includes:

a clamping frame Z-direction mounting base 523; and

a clamping frame Z-direction guide rail lead screw, wherein the nut of the clamping frame Z-direction guide rail lead screw is fixed on the upper surface of the clamping frame Y-direction mounting base; the guide direction of the guide rail of the clamping frame Z-direction guide rail lead screw is the vertical direction and is consistent with the Z direction of the silicon rod cutting system, and the slide block of the clamping frame Z-direction guide rail lead screw is fixed at the flaw-piece clamping jaw back plate; and

the clamping frame Z-direction guide rail lead screw is configured to convert a received rotary motion into a linear motion along the guide rail of the clamping frame Z-direction guide rail lead screw, and outputting the linear motion by means of the slide block of the clamping frame Z-direction guide rail lead screw.

In some embodiments, the clamping frame Z-direction guide rail lead screw is driven by a motor.

The structure of the flaw-piece collection mechanism 53

In some embodiments, as shown in Fig. 5E, the flaw-piece collection mechanism 53 includes:

a collection underframe 531;

two groups of flaw-piece boxes, wherein each group of flaw-piece boxes has at least one flaw-piece box 532, and one of the flaw-piece boxes is used as one collection area; and

a synchronous reverse flaw-piece box motion assembly, which is configured to drive the two flaw-piece boxes 532 to synchronously and reversely move, wherein the synchronous reverse flaw-piece box motion assembly is fixed on the collection underframe 531, and the two groups of flaw-piece boxes 532 are fixed with the synchronous reverse flaw-piece box motion assembly.

The synchronous reverse flaw-piece box motion assembly enables the two groups of flaw-piece boxes to achieve synchronous reverse switching, thereby being convenient to operate; and meanwhile, the situation that the two groups of flaw-piece boxes are disposed on the same side is avoided, thereby avoiding interference to the placement of the flaw-pieces.
In some embodiments, as shown in Fig. 5E, the synchronous reverse flaw-piece box motion assembly includes:

two flaw-piece box guide rails 533-1, which are fixed on the upper surface of the collection underframe 531 in parallel at intervals;

two flaw-piece box slide blocks 533-2, which are respectively disposed on the outer bottoms of the two groups of flaw-piece boxes 532, wherein the flaw-piece box slide blocks 533-2 are in slide fit with the flaw-piece box guide rails 533-1; and

when each group of flaw-piece boxes has two or more flaw-piece boxes, the flaw-piece boxes in each group of flaw-piece boxes are disposed at intervals in the length direction of the flaw-piece box guide rails.

In some embodiments, as shown in Fig. 5E, the synchronous reverse flaw-piece box motion assembly further includes:

a flaw-piece box sliding gas cylinder 533-3, which is fixed at the collection underframe 531, wherein the piston rod of the flaw-piece box sliding gas cylinder 533-3 is fixed with the outer bottoms of the first group of flaw-piece boxes; the first group of flaw-piece boxes are a group of flaw-piece boxes, which are fixed with the piston rod of the flaw-piece box sliding gas cylinder 533-3, and the second group of flaw-piece boxes are a group of flaw-piece boxes, which are not fixed with the piston rod of the flaw-piece box sliding gas cylinder 533-3;

a synchronous wheel 533-4, which is fixed on the upper surface of the collection underframe 531 and is disposed between the two group of flaw-piece boxes 532; and

a synchronous belt 533-5, wherein the synchronous belt 533-5 bypasses the synchronous wheel 533-4, and the two ends of the synchronous belt 533-5 are respectively fixed with the two group of flaw-piece boxes 532; the flaw-piece box sliding gas cylinder 533-3 is configured to push the first group of flaw-piece boxes to linearly reciprocate along the flaw-piece box guide rails 533-1, so as to drive the second group of flaw-piece boxes to linearly reciprocate in a reverse direction.

In some embodiments, as shown in Fig. 5E, each flaw-piece box 532 has four flaw-piece storage positions, the four flaw-piece storage positions are disposed in two rows, and the two rows of flaw-piece storage positions are disposed adjacent to each other in the guide direction of the flaw-piece box guide rails.

In some embodiments, as shown in Fig. 5E, one end of each of the two flaw-piece box guide rails is set to be a to-be-flaw-piece position; and the flaw-piece collection mechanism further includes:

a photoelectric bracket 534-1, which is fixed with the collection underframe 531; and

two pairs of storage position correlation photoelectric modules 534-2, which are disposed in two rows, wherein each pair of storage position correlation photoelectric modules 534-2 is relatively fixed on the photoelectric bracket, and the two pairs of storage position correlation photoelectric modules 534-2 are configured to detect whether flaw-pieces are placed on the flaw-piece storage positions of the flaw-piece box of the to-be-flaw-piece position.

In some embodiments, the four flaw-piece storage positions of the same flaw-piece box are configured to carry the four flaw-pieces which are cut off after the same silicon rod is cut into the square rod, so as to conveniently encode the four flaw-pieces from the same silicon rod.

**Claims**

1. A silicon rod cutting system, comprising:

   a machine base, wherein the machine base has at least two cutting stations, which are disposed at intervals;
   at least two cutting devices, which are fixed on the machine base, wherein the at least two cutting devices and the at least two cutting stations are disposed in a one-to-one corresponding manner, and each of the at least two cutting devices is configured to cut a silicon rod on a corresponding cutting station of the at least two cutting stations;
   a loading and unloading device, which is fixed with the machine base, wherein the loading and unloading device is configured to load a round silicon rod and unload a square rod formed by cutting the round silicon rod; and
   a transfer device, which is disposed on the machine base and is disposed between the at least two cutting stations, wherein the transfer device is configured to transfer, to the at least two cutting station, the round silicon rod loaded by the loading and unloading device, and transfer, to the loading and unloading device, the square rod formed by cutting on the at least two cutting station.

2. The silicon rod cutting system as claimed in claim 1, wherein each of the at least two cutting devices comprises:

   a cutting handpiece mechanism, wherein the cutting handpiece mechanism is provided with a diamond wire and a handpiece through hole, and a cutting segment of the diamond wire and the handpiece through hole do not interfere with each other;
   wherein the handpiece through hole is configured to take out a flaw-piece formed by cutting the silicon rod, and the cutting segment is a part of the diamond wire configured to cut the silicon rod in motion.

3. The silicon rod cutting system as claimed in claim 2, wherein each of the at least two cutting devices comprises two cutting handpiece mechanisms; and the cutting segments of the two cutting handpiece mechanisms of each of the at least two cutting devices are disposed opposite to each other.

4. The silicon rod cutting system as claimed in claim 3, wherein the cutting handpiece mechanism comprises a wire saw assembly, and the wire saw assembly comprises:

a wire saw mounting rack, wherein the wire saw mounting rack is provided with the handpiece through hole which extending vertically; and the diamond wire, which is disposed on a front side of the wire saw mounting rack; wherein the cutting segment is lower than the handpiece through hole, and a side of the wire saw mounting rack where the diamond wire is disposed is the front side of the wire saw mounting rack.

5. The silicon rod cutting system as claimed in claim 4, the silicon rod cutting system further comprises a flaw-piece clamping mechanism, which is configured to pass through the handpiece through hole and enter a space between the two cutting handpiece mechanisms to clamp the flaw-piece, and exit from the handpiece through hole to take out the flaw-piece from the space between the two cutting handpiece mechanisms.

6. The silicon rod cutting system as claimed in claim 5, wherein the flaw-piece clamping mechanism comprises a flaw-piece clamping frame, and the flaw-piece clamping frame comprises:

a flaw-piece clamping jaw mounting column; a top clamping jaw and a bottom clamping jaw, which are disposed on a front side of the flaw-piece clamping jaw mounting column and are opposite to each other along a vertical direction, wherein at least one of the top clamping jaw and the bottom clamping jaw is slidably connected with the flaw-piece clamping jaw mounting column, and is configured to move up and down in the vertical direction, and a side of the flaw-piece clamping jaw mounting column where the top clamping jaw and the bottom clamping jaw are disposed is the front side of the flaw-piece clamping jaw mounting column.

7. The silicon rod cutting system as claimed in claim 6, wherein the bottom clamping jaw is fixed on a bottom end of the flaw-piece clamping jaw mounting column; and the top clamping jaw is slidably connected with the flaw-piece clamping jaw mounting column, and the top clamping jaw is configured to move up and down in the vertical direction.

8. The silicon rod cutting system as claimed in claim 6, wherein the flaw-piece clamping frame further comprises:

a flaw-piece clamping jaw back plate which disposed vertically; a flaw-piece clamping jaw slide plate, wherein the flaw-piece clamping jaw slide plate is disposed on one plate surface of the flaw-piece clamping jaw back plate and is slidably connected with the flaw-piece clamping jaw back plate, the flaw-piece clamping jaw slide plate is configured to move in a horizontal direction along the flaw-piece clamping jaw back plate, and a motion direction of the flaw-piece clamping jaw slide plate is consistent with an X direction of the silicon rod cutting system where a flaw-piece unloading device is disposed; and a flaw-piece clamping jaw mounting column fixing plate, wherein two opposite end sides of the flaw-piece clamping jaw mounting column fixing plate are respectively fixed with the flaw-piece clamping jaw slide plate and the flaw-piece clamping jaw mounting column.

9. The silicon rod cutting system as claimed in claim 8, wherein two flaw-piece clamping jaw mounting columns are provided, and the top clamping jaw and the bottom clamping jaw are disposed on the front side of each flaw-piece clamping jaw mounting column;

two flaw-piece clamping jaw mounting column fixing plates are provided for respectively fixing the two flaw-piece clamping jaw mounting columns in a one-to-one corresponding manner; two flaw-piece clamping jaw slide plates are provided to be respectively fixed with the two flaw-piece clamping jaw mounting column fixing plates in a one-to-one corresponding manner, wherein front sides of the two flaw-piece clamping jaw mounting columns are disposed opposite to each other.

10. The silicon rod cutting system as claimed in claim 9, wherein the flaw-piece clamping mechanism further comprises:

a top clamping jaw Z-direction guide rail, wherein each of the two flaw-piece clamping jaw mounting columns is provided with two top clamping jaw Z-direction guide rails disposed in parallel, and a guide direction of the top clamping jaw Z-direction guide rail is the vertical direction and is consistent with a Z direction of the silicon rod cutting system;

a top clamping jaw Z-direction slide block, which is disposed on a back side of the top clamping jaw; and

a top clamping jaw Z-direction motion gas cylinder, which is fixed at the flaw-piece clamping jaw mounting column, wherein a piston rod of the top clamping jaw Z-direction motion gas cylinder is fixed with the back side of the top clamping jaw; and

the top clamping jaw Z-direction motion gas cylinder is configured to push the top clamping jaw to move up and down in the vertical direction.

11. The silicon rod cutting system as claimed in claim 10, wherein the flaw-piece clamping mechanism further comprises:

a clamping jaw X-direction guide rail, wherein a plate surface of the flaw-piece clamping jaw back plate that is close to the flaw-piece clamping jaw slide plate is provided with two clamping jaw X-direction guide rails disposed in parallel, and a guide direction of the clamping jaw X-direction guide rail is consistent with a X direction of the silicon rod cutting system;

a clamping jaw X-direction slide block, which is disposed on a plate surface of the flaw-piece clamping jaw slide plate that is close to the flaw-piece clamping jaw back plate; and

a clamping jaw X-direction guide rail screw, which is fixed at the flaw-piece clamping jaw back plate, wherein a piston rod of the clamping jaw X-direction motion gas cylinder is fixed with the flaw-piece clamping jaw slide plate; and

the clamping jaw X-direction motion gas cylinder is configured to push the flaw-piece clamping jaw slide plate to move along the clamping jaw X-direction guide rail, and an upper clamping jaw and a lower clamping jaw, which are disposed on one flaw-piece clamping jaw mounting column fixing plate, are configured to get close to or away from an upper clamping jaw and a lower clamping jaw, which is disposed on an other flaw-piece clamping jaw mounting column fixing plate.

12. The silicon rod cutting system as claimed in claim 11, wherein the flaw-piece clamping mechanism further comprises:

a clamping frame motion assembly, which is fixed with the flaw-piece clamping jaw back plate and is disposed on the machine base of the silicon rod cutting system, wherein a Y direction of the silicon rod cutting system is perpendicular to the X direction and the Z direction of the silicon rod cutting system; and

the clamping frame motion assembly is configured to drive the clamping frame to linearly reciprocate in three directions of the silicon rod cutting system, that is, the X direction, the Y direction and the Z direction.

13. The silicon rod cutting system as claimed in claim 12, wherein the clamping frame motion assembly comprises:

a clamping frame X-direction guide rail, which is fixed on an upper surface of the machine base of the silicon rod cutting system, wherein a guide direction of the clamping frame X-direction guide rail is consistent with the X direction of the silicon rod cutting system;

a clamping frame X-direction mounting base; and

a clamping frame X-direction motion slide block, which is fixed on an outer bottom of the clamping frame X-direction mounting base, wherein the clamping frame X-direction motion slide block cooperates with the clamping frame X-direction motion guide rail.

14. The silicon rod cutting system as claimed in claim 13, wherein the clamping frame motion assembly further comprises:

a clamping frame Y-direction mounting base; and

a clamping frame Y-direction gear rack and a clamping frame Y-direction gear, which are engaged with each other, wherein the clamping frame Y-direction gear rack is fixed on an upper surface of the clamping frame X-direction mounting base; and a guide direction of the clamping frame Y-direction gear rack is consistent with the Y direction of the silicon rod cutting system, and the clamping frame Y-direction gear is fixed on an outer bottom of the clamping frame Y-direction mounting base.

15. The silicon rod cutting system as claimed in claim 14, wherein the clamping frame motion assembly further comprises:

a clamping frame Z-direction mounting base; and

a clamping frame Z-direction guide rail lead screw, wherein a nut of the clamping frame Z-direction guide rail lead screw is fixed on an upper surface of the clamping frame Y-direction mounting base; a guide direction of a guide rail of the clamping frame Z-direction guide rail lead screw is the vertical direction and is consistent with the Z direction of the silicon rod cutting system, and a slide block of the clamping frame Z-direction guide rail lead screw is fixed at the flaw-piece clamping jaw back plate;

wherein the clamping frame Z-direction guide rail lead screw is configured to convert a received rotary motion into a linear motion along the guide rail of the clamping frame Z-direction guide rail lead screw, and outputting the linear motion by means of the slide block of the clamping frame Z-direction guide rail lead screw.

16. The silicon rod cutting system as claimed in any one of claims 5-15, wherein the cutting device further comprises a silicon rod chuck mechanism, and the silicon rod chuck mechanism comprises:

a chuck rack;

an upper floating head, which is disposed at the chuck rack, wherein the chuck rack is configured to move up and down, and the upper floating head is configured to press an upper end face of a silicon rod arranged vertically; and

a flaw-piece support frame, which is connected with the chuck rack and is configured to extend out downwards and reset upwards, wherein the flaw-piece support frame is configured to extend out downwards and supported on an outer peripheral surface of the silicon rod, and the flaw-piece support frame is configured to reset upwards to leave the outer peripheral surface of the silicon rod.

17. The silicon rod cutting system as claimed in claim 16, wherein the flaw-piece support frame comprises:

a flaw-piece support frame mounting member, which is fixed with the chuck rack;

a handrail fixing member and a flaw-piece handrail, wherein the flaw-piece handrail is fixed on one side of the handrail fixing member that is away from the upper floating head and extends out downwards; and

a flaw-piece support driving device, which is connected with the flaw-piece support frame mounting member and the handrail fixing member, and is configured to drive the handrail fixing member and the flaw-piece handrail to extend out downwards and reset upwards.

18. The silicon rod cutting system as claimed in claim 17, wherein the flaw-piece support driving device is a flaw-piece support driving gas cylinder; and a cylinder body of the flaw-piece support driving gas cylinder is fixed with the flaw-piece support frame mounting member, the guide rod of the flaw-piece support driving gas cylinder is fixed with the handrail fixing member, and the guide rod of the flaw-piece support driving gas cylinder stretches out and draws back to drive the handrail fixing member and the flaw-piece handrail to extend out downwards and reset upwards.

19. The silicon rod cutting system as claimed in claim 17, wherein the silicon rod chuck mechanism further comprises:

a chuck rack vertical-motion assembly, which is disposed between the two cutting handpiece mechanisms,

wherein the chuck rack is connected with the chuck rack vertical-motion assembly, the chuck rack vertical-motion assembly is configured to drive the chuck rack to move up and down in the vertical direction, and drive the upper floating head to press on the upper end face of the silicon rod disposed vertically and to leave the upper end face of the cut silicon rod.

20. The silicon rod cutting system as claimed in claim 18, wherein four flaw-piece handrails are fixed around the handrail fixing member.

21. The silicon rod cutting system as claimed in claim 17, wherein the upper floating head is provided with three downward-protruding upper floating head pressing heads, and the three upper floating head pressing heads are disposed at three vertexes of one triangle.

22. The silicon rod cutting system as claimed in claim 17, wherein the cutting device further comprises a silicon rod support mechanism; the silicon rod support mechanism comprises:

a silicon rod support mounting base; and a lower floating head, which is configured to support a lower end face of the silicon rod disposed vertically, wherein the lower floating head is disposed above the silicon rod support mounting base.

23. The silicon rod cutting system as claimed in claim 22, wherein the silicon rod support mechanism further comprises a flaw-piece support assembly, and the flaw-piece support assembly comprises:

a flaw-piece support driving device, which is fixed on the silicon rod support mounting base and is disposed at intervals from the lower floating head;

a flaw-piece support head, which is configured to support a position where the flaw-piece is formed after the lower end face of the silicon rod is cut, wherein the flaw-piece support head is fixed on a top end of the flaw-piece support driving device; and when the flaw-piece support driving device is configured to lock when the silicon rod is cut into a square rod and the flaw-piece, so that the flaw-piece support head keeps a height to support the flaw-piece.

24. The silicon rod cutting system as claimed in claim 23, wherein the flaw-piece support driving device is a flaw-piece support gas cylinder; and
a cylinder body of the flaw-piece support gas cylinder is fixed with the silicon rod support mounting base, and a guide rod of the flaw-piece support gas cylinder is fixed with the flaw-piece support head.

25. The silicon rod cutting system as claimed in claim 23, wherein the lower floating head is provided with three upward-protruding lower floating head support heads, and the three lower floating head support heads are disposed at three vertexes of a triangle.

26. The silicon rod cutting system as claimed in claim 23, wherein four flaw-piece support assemblies are provided, and the four flaw-piece support assemblies are disposed at four vertexes of a rectangle.

27. The silicon rod cutting system as claimed in claim 23, wherein the silicon rod support mechanism further comprises a silicon rod rotating assembly, and the silicon rod rotating assembly comprises:

a silicon rod rotating shaft, wherein the lower floating head is fixed on the silicon rod rotating shaft, and the silicon rod rotating shaft is rotatably connected with the silicon rod support mounting base; and
a silicon rod driving motor, which is fixed below the silicon rod support mounting base and is connected with the silicon rod rotating shaft, and the silicon rod driving motor is configured to drive the silicon rod rotating shaft to rotate.

28. The silicon rod cutting system as claimed in any one of claims 5-15, wherein each cutting handpiece mechanism further comprises:

a cleaning assembly, which is fixed on the front side of the wire saw mounting rack,
wherein the cleaning assembly is provided with a plurality of cleaning nozzles, and the cleaning nozzles of the cleaning assembly comprise: a first part of cleaning nozzles configured to cleaning the handpiece mechanism disposed on an opposite-side and the cutting handpiece mechanism disposed on a present-side, and a second part of cleaning nozzles configured to cleaning the cutting handpiece mechanism disposed on the opposite-side.

29. The silicon rod cutting system as claimed in claim 28, wherein the wire saw assembly further comprises:

a driving wheel assembly and a lower transition wheel, which are respectively disposed on the front side of the wire saw mounting rack; and
a tension wheel assembly and an upper transition wheel, which are respectively disposed on the front side of the wire saw mounting rack;
the diamond wire is an annular diamond wire, which is wound around outer peripheral surfaces of a driving wheel of the driving wheel assembly, the lower transition wheel, a tension wheel of the tension wheel assembly and the upper transition wheel, the cutting segment is formed on bottom ends of the driving wheel and the lower transition wheel, and the diamond wire and the handpiece through hole do not interfere with each other.

30. The silicon rod cutting system as claimed in claim 29, wherein the cleaning assembly comprises:
a first lower cleaning assembly, which is fixed on the front side of the wire saw mounting rack and is disposed above the driving wheel assembly, wherein the cleaning nozzles of the first lower cleaning assembly comprise: a first part of cleaning nozzles of the first lower cleaning assembly, which are configured to clean the driving wheels of the driving wheel assemblies of the cutting handpiece mechanism disposed on the opposite-side and the cutting handpiece mechanism disposed on the present-side, and a second part of cleaning nozzles of the first lower cleaning assembly, which are configured to clean the driving wheel of the driving wheel assembly of the cutting handpiece mechanism disposed on the opposite-side.

31. The silicon rod cutting system as claimed in claim 30, wherein the cleaning assembly further comprises:
a second lower cleaning assembly, which is fixed on the front side of the wire saw mounting rack and is disposed above the lower transition wheel, wherein the cleaning nozzles of the second lower cleaning assembly comprise: a first part of cleaning nozzles of the second lower cleaning assembly, which are configured to clean the lower transition wheels of the cutting handpiece mechanism disposed on the opposite-side and the cutting handpiece mechanism disposed on the present-side, and a second part of cleaning nozzles of the second lower cleaning assembly, which are configured to clean the lower transition wheel of the cutting handpiece mechanism disposed on the opposite-side.

**32.** The silicon rod cutting system as claimed in claim 31, wherein the cleaning assembly further comprises:

a first upper cleaning assembly, which is fixed on the front side of the wire saw mounting rack and is disposed above the tension wheel assembly, wherein the cleaning nozzles of the first upper cleaning assembly comprise: a first part of cleaning nozzles of the first upper cleaning assembly, which are configured to clean the tension wheels of the tension wheel assemblies of the cutting handpiece mechanism disposed on the opposite-side and the cutting handpiece mechanism disposed on the present-side, and a second part of cleaning nozzles of the first upper cleaning assembly, which are configured to clean the tension wheel of the tension wheel assembly of the cutting handpiece mechanism disposed on the opposite-side.

**33.** The silicon rod cutting system as claimed in claim 32, wherein the cleaning assembly further comprises:

a second upper cleaning assembly, which is fixed on the front side of the wire saw mounting rack and is disposed above the upper transition wheel, wherein the cleaning nozzles of the second upper cleaning assembly comprise: a first part of cleaning nozzles of the second upper cleaning assembly, which are configured to clean the upper transition wheels of the cutting handpiece mechanism disposed on the opposite-side and the cutting handpiece mechanism disposed on the present-side, and a second part of cleaning nozzles of the second upper cleaning assembly, which are configured to clean the upper transition wheel of the cutting handpiece mechanism disposed on the opposite-side.

**34.** The silicon rod cutting system as claimed in claim 33, wherein the cutting handpiece mechanism further comprises:

a spray assembly, wherein the spray assembly is fixed on the front side of the wire saw mounting rack; and
the spray assembly is provided with a spray nozzle, which is configured to spray cutting fluid to the silicon rod and a cutting seam formed by cutting the silicon rod via the annular diamond wire, and perform cooling.

**35.** The silicon rod cutting system as claimed in claim 34, wherein the spray assembly comprises:

a lower spray assembly, which is fixed on the front side of the wire saw mounting rack, wherein the lower spray assembly is provided with a plurality of lower spray nozzles, which are disposed at intervals up and down and are configured to spray a cutting seam of the cutting segment for cutting the silicon rod; and
an upper spray assembly, which is fixed on the front side of the wire saw mounting rack, wherein the upper spray assembly is provided with a plurality of upper spray nozzles, which are transversely disposed at intervals and are configured to spray the upper end face of the silicon rod.

**36.** The silicon rod cutting system as claimed in any one of claims 5-15, further comprising:

a flaw-piece collection mechanism, wherein the flaw-piece collection mechanism has collection areas, and the collection areas and the at least two cutting stations of the silicon rod cutting system are disposed in a one-to-one corresponding manner with; and
a collection control unit, which is configured to control the flaw-piece clamping mechanism to clamp the flaw-pieces generated by cutting the silicon rod from the cutting stations of the silicon rod cutting system, and convey the flaw-pieces into the flaw-piece collection mechanism, and the flaw-pieces generated by cutting one silicon rod are placed in one collection area.

**37.** The silicon rod cutting system as claimed in claim 36, wherein the flaw-piece collection mechanism comprises:

a collection underframe;
two groups of flaw-piece boxes, wherein each group of flaw-piece boxes has at least one flaw-piece box; and
a synchronous reverse flaw-piece box motion assembly, which is fixed on the collection underframe, wherein the two groups of flaw-piece boxes are fixed with the synchronous reverse flaw-piece box motion assembly; and the synchronous reverse flaw-piece box motion assembly is configured to drive the two groups of flaw-piece boxes to synchronously and reversely move.

**38.** The silicon rod cutting system as claimed in claim 37, wherein the synchronous reverse flaw-piece box motion assembly comprises:

two flaw-piece box guide rails, which are fixed on an upper surface of the collection underframe in parallel at intervals;
two flaw-piece box slide blocks, which are respectively disposed on outer bottoms of the two groups of flaw-piece boxes, wherein the two flaw-piece box slide blocks are in slide fit with the two flaw-piece box guide rails; and
when each group of flaw-piece boxes has two or more flaw-piece boxes, flaw-piece boxes in the each group of flaw-piece boxes are disposed at intervals in a length direction of a flaw-piece box guide rail.

39. The silicon rod cutting system as claimed in claim 37, wherein the synchronous reverse flaw-piece box motion assembly further comprises:

a flaw-piece box sliding gas cylinder, which is fixed at the collection underframe, wherein a piston rod of the flaw-piece box sliding gas cylinder is fixed with outer bottoms of a first group of flaw-piece boxes; the first group of flaw-piece boxes are a group of flaw-piece boxes, which are fixed with the piston rod of the flaw-piece box sliding gas cylinder;
a synchronous wheel, which is fixed on the upper surface of the collection underframe and is disposed between the two groups of flaw-piece boxes; and
a synchronous belt, wherein the synchronous belt bypasses the synchronous wheel, and two ends of the synchronous belt are respectively fixed with the two groups of flaw-piece boxes.

40. The silicon rod cutting system as claimed in claim 37, wherein each flaw-piece box has four flaw-piece storage positions, the four flaw-piece storage positions are disposed in two rows, and the two rows of flaw-piece storage positions are disposed adjacent to each other in a guide direction of the flaw-piece box guide rail.

41. The silicon rod cutting system as claimed in claim 38, wherein one end of each of the two flaw-piece box guide rails is set to be a to-be-flaw-piece position; the flaw-piece collection mechanism further comprises:

a photoelectric bracket, which is fixed with the collection underframe; and
two pairs of storage position correlation photoelectric modules, which are disposed in two rows, wherein each pair of storage position correlation photoelectric modules is relatively fixed on the photoelectric bracket, and the two pairs of storage position correlation photoelectric modules are configured to detect whether a flaw-piece is placed on a flaw-piece storage position of the flaw-piece box of the to-be-flaw-piece position.

42. The silicon rod cutting system as claimed in any one of claims 5-15, wherein the transfer device comprises:

a loading and unloading clamping jaw frame;

an upper clamping jaw assembly and a lower clamping jaw assembly, which are disposed on one side of the loading and unloading clamping jaw frame in parallel at intervals; and
an upper clamping jaw transfer driving device, which is respectively fixed with the lower clamping jaw assembly and the upper clamping jaw assembly, and is configured to drive the upper clamping jaw assembly to move up and down relative to the lower clamping jaw assembly; and
a lower clamping jaw transfer driving device, which is respectively fixed with the loading and unloading clamping jaw frame and the lower clamping jaw assembly, and is configured to drive the lower clamping jaw assembly, the upper clamping jaw assembly and the upper clamping jaw transfer driving device to move up and down synchronously.

43. The silicon rod cutting system as claimed in claim 42, wherein the upper clamping jaw transfer driving device comprises:

a transfer gas-liquid cylinder, wherein a cylinder body of the transfer gas-liquid cylinder is fixed on a bottom of the loading and unloading clamping jaw frame, and an upper end of a guide rod of the transfer gas-liquid cylinder is fixed with the lower clamping jaw assembly; and
a gas-liquid converter, which is connected with the transfer gas-liquid cylinder, wherein a gas entering the gas-liquid converter squeezes a hydraulic oil into the transfer gas-liquid cylinder, and drive the guide rod of the transfer gas-liquid cylinder to jack up the lower clamping jaw assembly; and
the lower clamping jaw transfer driving device comprises: a transfer gas cylinder, wherein a cylinder body of the transfer gas cylinder is fixed with the lower jaw assembly, and an upper end of a guide rod of the transfer gas cylinder is fixed with the upper jaw assembly; and a gas source enters the gas of the transfer gas cylinder, and drive the guide rod of the transfer gas cylinder to jack up the upper jaw assembly.

44. The silicon rod cutting system as claimed in claim 42, wherein each of the upper clamping jaw assembly and the lower clamping jaw assembly comprise:

a transfer clamping jaw fixing plate;
a left clamping jaw and a right clamping jaw, which are fixed on a front side of the transfer clamping jaw fixing plate and are disposed opposite to each other, and the left clamping jaw and the right clamping jaw get close to and away from each other, wherein a side of the transfer clamping jaw fixing plate where the left clamping jaw and the right clamping jaw are fixed is the front side of the transfer clamping jaw fixing plate; and

a silicon rod detection assembly, which is fixed on the front side of the transfer clamping jaw fixing plate, wherein a silicon rod detection probe of the silicon rod detection assembly is disposed between the left clamping jaw and the right clamping jaw.

45. The silicon rod cutting system as claimed in claim 44, wherein the transfer device further comprises:

two vertical guide rails, which are vertically disposed in parallel on one side of the transfer clamping jaw fixing plate; and

two transfer clamping jaw slide blocks, which are fixed on a back side of the transfer clamping jaw fixing plate, wherein the two transfer clamping jaw slide blocks are slidably connected with the two vertical guide rails in a one-to-one corresponding manner; and

the upper end of the guide rod of the transfer gas-liquid cylinder is fixed with the transfer clamping jaw fixing plate of the lower clamping jaw assembly, and the upper end of the guide rod of the transfer gas cylinder is fixed with the transfer clamping jaw fixing plate of the upper clamping jaw assembly.

46. The silicon rod cutting system as claimed in claim 44, wherein each of the upper clamping jaw assembly and the lower clamping jaw assembly further comprises:
a synchronous reverse clamping jaw motion assembly, wherein the left clamping jaw and the right clamping jaw are disposed with the transfer clamping jaw fixing plate by means of the synchronous reverse clamping jaw motion assembly.

47. The silicon rod cutting system as claimed in claim 42, wherein the transfer device further comprises:

a transfer rotating mechanism, wherein the loading and unloading clamping jaw frame is fixed on the transfer rotating mechanism, and the transfer rotating mechanism is disposed on the machine base of the silicon rod cutting system and moves between the two cutting stations of the silicon rod cutting system; and

the transfer rotating mechanism is configured to drive the loading and unloading clamping jaw frame to rotate, is further configured to move between the two cutting stations of the silicon rod cutting system in a transverse direction of the silicon rod cutting system, and is further configured to move in the Y direction of the silicon rod cutting system.

48. The silicon rod cutting system as claimed in any one of claims 5-15, wherein the loading and unloading device comprises a round rod loading assembly, and the round rod loading assembly comprises:

a round rod loading rack with L-shaped;
the loading and unloading device further comprises:

a loading and unloading support frame, wherein the round rod loading rack is rotatably connected with the loading and unloading support frame;
a loading turnover driving device, which is respectively fixed with a bottom of the loading and unloading support frame and an outer bottom of the round rod loading rack, wherein the loading turnover driving device is configured to drive the round rod loading rack to turn over by 90 degrees from an initial position of the round rod loading rack; and
a loading processing unit, which is configured to control the loading turnover driving device to control the round rod loading rack to accelerate a turnover at first, and when the round rod loading rack is turned over to a preset angle, reduce the turnover speed of the round rod loading rack until the round rod loading rack is turned over by 90 degrees.

49. The silicon rod cutting system as claimed in claim 48, wherein the value range of the preset angle is greater than or equal to 60 degrees and less than or equal to 85 degrees.

50. The silicon rod cutting system as claimed in claim 48, wherein the loading turnover driving device is a loading turnover oil cylinder; and
a cylinder body of the loading turnover oil cylinder is fixed on the bottom of the loading and unloading support frame, an upper end of the guide rod of the loading turnover oil cylinder is fixed with the outer bottom of the round rod loading rack, and the loading turnover oil cylinder is configured to drive the round rod loading rack to turn over by 90 degrees from the initial position of the round rod loading rack.

51. The silicon rod cutting system as claimed in claim 50, wherein the loading and unloading device further comprises:

a deceleration proximity switch, which is connected with the loading processing unit, and is fixed to a position where a long arm of the round rod loading rack is turned over to the preset angle,

wherein the loading processing unit is configured to, after receiving an in-place signal of the deceleration proximity switch, adjust the flow rate of an oil inlet of the loading turnover oil cylinder to reduce a speed of the turnover, until the round rod loading rack is turned over by 90 degrees.

52. The silicon rod cutting system as claimed in claim 51, wherein an inner side of a short arm of the round rod loading rack is a length measurement reference surface; the round rod loading assembly further comprises:

    a round rod support mechanism, which is fixed on an inner side of the long arm of the round rod loading rack and is configured to support a horizontally placed round silicon rod when the long arm of the round rod loading rack is transversely placed;
    a round rod clamping block and a round rod clamping driving device, wherein the round rod clamping driving device is respectively fixed with the round rod support mechanism and the round rod clamping block; the round rod clamping block is configured to, under a driving of the round rod clamping driving device, push a round silicon rod disposed on the round rod support mechanism to abut against the length measurement reference surface for clamping and fixing; and
    a clamping block displacement measurement device, which is fixed with the round rod loading rack and is configured to measure a displacement of the round rod clamping block; and the loading processing unit is further configured to obtain a length of the round silicon rod according to the distance between an initial position of the round rod clamping block and the length measurement reference surface, as well as the displacement of the round rod clamping block; and the initial position of the round rod clamping block is a position where the round rod clamping block is disposed when the round rod clamping driving device extends to the maximum length.

53. The silicon rod cutting system as claimed in claim 52, wherein the round rod clamping driving device is a round rod clamping gas cylinder, a cylinder body of the round rod clamping gas cylinder is fixed with the round rod loading rack, and the round rod clamping block is fixed on an upper end of a guide rod of the round rod clamping gas cylinder; and the initial position of the round rod clamping block is a position where the round rod clamping block is disposed when the guide rod of the round rod clamping gas cylinder extends to the maximum length.

54. The silicon rod cutting system as claimed in claim 53, wherein the clamping block displacement measurement device is a stretching encoder.

55. The silicon rod cutting system as claimed in claim 53, wherein the loading processing unit is configured to obtain the length L of the round silicon rod according to a following relational expression:

$$L = K - S,$$

    wherein, K denotes a distance between the initial position of the round rod clamping block and the length measurement reference surface, and S denotes a displacement of the round rod clamping block.

56. The silicon rod cutting system as claimed in claim 48, wherein the loading and unloading device further comprises:

    two square rod unloading assemblies;
    wherein there are two round rod loading assemblies, and the two round rod loading assemblies and the two square rod unloading assemblies are disposed in parallel.

57. The silicon rod cutting system as claimed in any one of claims 5-15, wherein the cutting device further comprises:

    a support frame, which is disposed on the machine base of the silicon rod cutting system; and
    a feeding mechanism, wherein the support frame is connected with the two cutting handpiece mechanisms by means of the feeding mechanism; and
    the feeding mechanism is configured to drive the two cutting handpiece mechanisms to move face to face and back to back, and adjust the distance between two cutting segments.

58. The silicon rod cutting system as claimed in claim 57, wherein the feeding mechanism is further configured to drive the two cutting handpiece mechanisms to move up and down in the vertical direction, so as to cut and reset the silicon rod disposed vertically.

59. The silicon rod cutting system as claimed in claim 58, wherein the feeding mechanism comprises:

    transverse feeding mechanisms, which are in one-to-one correspondence with the two cutting handpiece mechanisms, wherein a cutting handpiece mechanisms is fixed with a corresponding transverse feeding mechanism, and the transverse feeding mechanisms are disposed with the support frame; and
the transverse feeding mechanisms are configured to drive the two cutting handpiece mechanisms to get close to and away from each other, and adjust the distance between the cutting segments of the two cutting handpiece mechanisms of the cutting device.

60. The silicon rod cutting system as claimed in claim 59, wherein the feeding mechanism further comprises:

vertical feeding mechanisms, which are in one-to-one correspondence with the transverse feeding mechanisms, and are vertically fixed on a same side of the support frame respectively, wherein a transverse feeding mechanism is fixed on one of the sides of a corresponding vertical feeding mechanism; and
a feeding control unit, which is configured to control the transverse feeding mechanisms, and adjust the distance between the two cutting segments, and is further configured to control the two vertical feeding mechanisms, and adjust the motion of the two cutting handpiece mechanisms in the vertical direction.

61. The silicon rod cutting system as claimed in claim 60, wherein the transverse feeding mechanism comprises:

a wire saw transverse guide rail lead screw, wherein a nut of the wire saw transverse guide rail lead screw is fixed at the wire saw vertical slide plate of the vertical feeding mechanism, and a guide direction of the guide rail of the wire saw transverse guide rail lead screw is a direction in which the two cutting segments get close to and away from each other;
a wire saw transverse slide plate, which is fixed with a slide block of the wire saw transverse guide rail lead screw and is fixed with the cutting handpiece mechanism; and
a wire saw transverse driving motor and a wire saw transverse speed reducer, wherein the wire saw transverse driving motor is connected with the wire saw transverse speed reducer, and output a rotary motion to the wire saw transverse guide rail lead screw.

62. The silicon rod cutting system as claimed in claim 61, wherein the vertical feeding mechanism comprises:

a wire saw vertical guide rail lead screw, wherein a nut of the wire saw vertical guide rail lead screw is fixed at the support frame, and a guide direction of the guide rail of the wire saw vertical guide rail lead screw is an upper-lower vertical direction;
a wire saw vertical slide plate, which is fixed with a slide block of the wire saw vertical guide rail lead screw and is fixed with the nut of the wire saw transverse guide rail lead screw; and
a wire saw vertical driving motor and a wire saw vertical speed reducer, wherein the wire saw vertical driving motor and the wire saw vertical speed reducer output a rotary motion to the wire saw vertical guide rail lead screw.

63. The silicon rod cutting system as claimed in claim 62, wherein the vertical feeding mechanism further comprises:

a blocking latch, wherein a socket of the blocking latch is fixed at the upper part of a side face of the support frame; and
a blocking strip, which is transversely fixed at the wire saw vertical slide plate,
wherein the blocking latch is configured to, when the cutting handpiece mechanism moves to the highest position, make a plug of the blocking latch to extend out to block the blocking strip from moving downwards, and prevent the wire saw vertical slide plate and the cutting handpiece mechanism from moving downwards.

Fig. 1

Fig. 1A

Fig. 1B

Fig. 1C

215

2

214

22

22

211-1

215

217

213

216

211

23

212

Fig. 2A

Fig. 2B

Fig. 2C

Fig. 3A

Fig. 3B

Fig. 3C

Fig. 3D

Fig. 3E

Fig. 3F

413-3

41

413-4

412-4

412-3

411

413-1

411-1

413-2

412-2

412-1

414-1

Fig. 4A

412-3

412-4

Silicon rod

412-2

Fig. 4B

412-3    412-4

Flaw-piece                                    Flaw-piece

Silicon
rod

412-2

Fig. 4C

412-3
412-3

412-31    412-34

411-1

411-32    412-33

411

Fig.4D                    Fig.4E

Fig.4F

Fig. 4G

Fig. 4H

Fig. 5

Fig. 5A

Fig. 5B

511
512-1
521-1
523
522
513
521-2
Fig. 5C

512-1
513
Fig. 5D

534-2
534-2
53
532
533-5
534-2
533-2
533-1
533-1
534-1
534-2
533-5
533-4
531

Fig. 5E

## INTERNATIONAL SEARCH REPORT

| International application No. |
|---|
| **PCT/CN2022/127592** |

**A. CLASSIFICATION OF SUBJECT MATTER**

B28D 5/04(2006.01)i

According to International Patent Classification (IPC) or to both national classification and IPC

**B. FIELDS SEARCHED**

Minimum documentation searched (classification system followed by classification symbols)

B28D

Documentation searched other than minimum documentation to the extent that such documents are included in the fields searched

Electronic data base consulted during the international search (name of data base and, where practicable, search terms used)

CNABS, CNKI, VEN: 切割, 硅棒, 机座, 上下料, 上料, 下料, 转运, 金刚线, 夹爪, cut, Si, silicon, bar, rod, base, load, feed, bait, lay-off, transport, transfer, diamond, wire, clamp, jaw, pawl.

**C. DOCUMENTS CONSIDERED TO BE RELEVANT**

| Category* | Citation of document, with indication, where appropriate, of the relevant passages | Relevant to claim No. |
|---|---|---|
| PX | CN 114102889 A (QINGDAO GAOCE TECHNOLOGY CO., LTD.) 01 March 2022 (2022-03-01) see description, paragraphs 41-365, and figures 1-5E | 1-63 |
| PX | CN 113927765 A (QINGDAO GAOCE TECHNOLOGY CO., LTD.) 14 January 2022 (2022-01-14) see claims 1-63 | 1-63 |
| PX | CN 113894954 A (QINGDAO GAOCE TECHNOLOGY CO., LTD.) 07 January 2022 (2022-01-07) see description, paragraphs 35-355, and figures 1-5E | 1-63 |
| X | CN 111619026 A (DALIAN LINTON NC MACHINE CO., LTD.) 04 September 2020 (2020-09-04) see description, paragraphs 68-87, and figures 1-13 | 1-5, 28-43, 47-63 |
| Y | | 16, 44-46 |
| Y | CN 211762658 U (QINGDAO GAOCE TECHNOLOGY CO., LTD.) 27 October 2020 (2020-10-27) see description, paragraphs 52-83, and figures 1-14 | 16, 44-46 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 December 2022** | **18 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/127592** |

**C.    DOCUMENTS CONSIDERED TO BE RELEVANT**

| Category* | Citation of document, with indication, where appropriate, of the relevant passages | Relevant to claim No. |
|---|---|---|
| A | US 4955357 A (HI-SILICON CO., LTD.) 11 September 1990 (1990-09-11)<br>    see entire document | 1-63 |

Form PCT/ISA/210 (second sheet) (January 2015)

**INTERNATIONAL SEARCH REPORT**
Information on patent family members

| International application No. |
| --- |
| **PCT/CN2022/127592** |

| Patent document cited in search report | | | Publication date (day/month/year) | Patent family member(s) | Publication date (day/month/year) |
| --- | --- | --- | --- | --- | --- |
| CN | 114102889 | A | 01 March 2022 | None | |
| CN | 113927765 | A | 14 January 2022 | None | |
| CN | 113894954 | A | 07 January 2022 | None | |
| CN | 111619026 | A | 04 September 2020 | None | |
| CN | 211762658 | U | 27 October 2020 | None | |
| US | 4955357 | A | 11 September 1990 | None | |

Form PCT/ISA/210 (patent family annex) (January 2015)